(19) Europäisches Patentamt
European Patent Office
Office européen des brevets

(11) **EP 4 712 396 A1**

(12) **EUROPEAN PATENT APPLICATION**
published in accordance with Art. 153(4) EPC

(43) Date of publication:
**18.03.2026 Bulletin 2026/12**

(21) Application number: **24806443.8**

(22) Date of filing: **09.05.2024**

(51) International Patent Classification (IPC):
*H04L 5/00* (2006.01)

(52) Cooperative Patent Classification (CPC):
**H04L 5/00; H04W 72/20**

(86) International application number:
**PCT/CN2024/091907**

(87) International publication number:
**WO 2024/235091 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 CN 202310541163**

(71) Applicant: **Apogee Networks, LLC**
**Plano, TX 75024 (US)**

(72) Inventors:
• WU, Lu
  **Shanghai 201206 (CN)**
• SONG, Shulin
  **Shanghai 201206 (CN)**
• ZHANG, Xiaobo
  **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS FOR NODE USED FOR WIRELESS COMMUNICATION**

(57) The present application discloses a method and apparatus for a node used for wireless communication. The method comprises: a first node receiving a first information block, the first information block being used for determining a reference time-domain resource set; receiving a first CSI reporting configuration, the first CSI reporting configuration indicating a first RS resource set, and the first RS resource set including one or more RS resources; and sending first CSI reporting. A first opportunity set includes at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting. The method can determine a transmission opportunity of an RS resource used for CSI reporting, and is applicable to different application scenarios/environments/modes, thereby increasing the flexibility and the transmission capacity of a system.

FIG. 1

## Description

## Technical Field

The present application relates to a transmission method and apparatus in a wireless communication system, in particular to a solution and apparatus for channel measurement and reporting in a wireless communication system.

## Background Art

In an existing NR (New Radio) system, spectrum resources are statically divided into an FDD (Frequency Division Duplexing) spectrum and a TDD (Time Division Duplexing) spectrum. However, for the TDD spectrum, a base station and user equipment are both operated in a half-duplex mode. This half-duplex mode avoids self-interference and can alleviate the impact of cross-link interference, but it also brings about a decrease in resource utilization rate and an increase in latency. In view of these problems, supporting a flexible duplex mode on the TDD spectrum or the FDD spectrum has become a possible solution. At the 3GPP RAN (Radio Access Network) 1 #103e meeting, research work for a duplex technology was agreed. Therein, subband non-overlapping full duplex (SBFD) was proposed, i.e., a base station device is supported to simultaneously perform sending and receiving on two subbands. Communications under this mode will suffer from serious interference, comprising the self-interference and the cross-link interference.

## Summary of the Invention

In an existing system, in order to send CSI (Channel State Information) reporting, UE needs to obtain channel measurement for the CSI reporting based on an RS (Reference Signal) resource, wherein how to determine a transmission opportunity of the RS resource for the channel measurement is one key problem.

In view of the above problem, the present application discloses a solution. It should be explained that in the description of the present application, the flexible duplex mode is only used as a typical application scenario or example; and the present application can also be equally applicable to other scenarios (including but being not limited to SBFD, other flexible duplex modes or full-duplex modes, a variable link direction mode, a traditional duplex mode, a half-duplex mode, an energy-saving scenario, a non-energy-saving scenario, a capacity enhancement system, a system for near field communication, unlicensed frequency domain communication, IoT (Internet of Things), a URLLC (Ultra Reliable Low Latency Communication) network, Internet of Vehicles, etc.) facing similar problems, and can also achieve similar technical effects. In addition, the use of a unified design solution for different scenarios also helps to reduce hardware complexity and costs. In the absence of conflicts, embodiments and features in the embodiments in any node of the present application can be applied to any other node. In the absence of conflicts, embodiments and features in the embodiments of the present application can be arbitrarily combined with each other.

In particular, the interpretation of the terminologies, nouns, functions, and variables in the present application (if not specifically stated) may refer to the definitions in the 3GPP specification protocols TS36 series, TS38 series, and TS37 series. If necessary, reference may be made to 3GPP standards TS38.211, TS38.212, TS38.213, TS38.214, TS38.215, TS38.321, TS38.331, TS38.305, TS38.304, and TS37.355 to assist in understanding the present application.

The present application discloses a method for a first node used for wireless communication, characterized by comprising:

receiving a first information block, the first information block being used for determining a reference time-domain resource set, receiving a first CSI reporting configuration, the first CSI reporting configuration indicating a first RS resource set, and the first RS resource set comprising one or more RS resources; and
sending first CSI reporting,
wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, a problem to be solved by the present application comprises: how to determine a transmission opportunity set for channel measurement used for CSI reporting.

As one embodiment, benefits of using the above method comprise: using an appropriate transmission opportunity set used for channel measurement for CSI reporting.

As one embodiment, benefits of using the above method comprise: improving the CSI estimation precision.

As one embodiment, benefits of using the above method comprise: by determining an appropriate transmission opportunity set used for channel measurement, CSI reporting for a given application scenario may be obtained.

As one embodiment, benefits of using the above method comprise: by determining an appropriate transmission opportunity set used for channel measurement, CSI reporting for a given duplex mode (such as SBFD, full duplex, and half duplex) may be obtained.

As one embodiment, benefits of using the above method comprise: by determining an appropriate transmission opportunity set used for channel measurement, CSI reporting for a given energy-saving scenario (such as energy-saving and non-energy-saving) may be obtained.

As one embodiment, benefits of using the above method comprise: by determining an appropriate transmission opportunity set used for channel measurement, CSI reporting for a given interference environment may be obtained.

As one embodiment, benefits of using the above method comprise: by determining an appropriate transmission opportunity set used for channel measurement, CSI reporting for a given antenna/antenna array on a base station side may be obtained.

As one embodiment, benefits of using the above method comprise: by determining an appropriate transmission opportunity set used for channel measurement, CSI reporting for a given antenna/antenna array on a UE side may be obtained.

As one embodiment, benefits of using the above method comprise: by determining an appropriate transmission opportunity set used for channel measurement, CSI reporting for a given spatial characteristic may be obtained.

As one embodiment, benefits of using the above method comprise: being applicable to different application scenarios/environments/modes, thereby increasing the flexibility.

As one embodiment, benefits of using the above method comprise: simplifying the design of CSI measurement and reporting.

As one embodiment, benefits of the present application comprise: improving the transmission reliability.

As one embodiment, benefits of the present application comprise: increasing the flexibility of a system.

As one embodiment, benefits of the present application comprise: saving the network energy.

As one embodiment, benefits of the present application comprise: having good backward compatibility, and simplifying the design of CSI measurement and reporting.

According to one aspect of the present application, it is characterized in that the first CSI reporting at least comprises a first resource indicator, the first resource indicator indicates a first RS resource, the first RS resource is one RS resource in the first RS resource set, and one or more transmission opportunities, which are not later than that of the CSI reference resource of the first CSI reporting and meet a first condition, of the first RS resource belong to a first opportunity set.

As one embodiment, benefits of using the above method comprise: supporting the selection of RS resources, and improving the CSI estimation precision.

As one embodiment, benefits of using the above method comprise: being applicable to different application scenarios/environments/modes, thereby increasing the flexibility of the system.

As one embodiment, benefits of the above method comprise: having good backward compatibility, and simplifying the design of CSI measurement and reporting.

According to one aspect of the present application, it is characterized in that the reference time-domain resource set comprises one or more symbols, at least one symbol in the reference time-domain resource set is configured by a higher layer parameter as a DL symbol, and one or more subcarriers in the one or more DL symbols of the reference time-domain resource set are used for uplink transmission.

As one embodiment, the above method supports the uplink transmission on DL symbols, improves the uplink coverage, and increases the uplink transmission capacity.

As one embodiment, the above method supports a flexible duplex mode, improves the uplink coverage, and increases the uplink transmission capacity.

As one embodiment, the above method supports an SBFD technology, improves the uplink coverage, and increases the uplink transmission capacity.

According to one aspect of the present application, it is characterized by comprising:

the first receiver receiving a second information block,
wherein the second information block is used for determining a reference frequency-domain resource set; and UL transmission in one or more DL symbols of the reference time-domain resource set belongs to the reference frequency-domain resource set in a frequency domain.

As one embodiment, the above method achieves simultaneous reception and sending on a base station side by defining a frequency-domain resource that may be occupied by uplink transmission on DL symbols.

As one embodiment, the above method supports a flexible duplex mode.

As one embodiment, the above method supports an SBFD technology.

According to one aspect of the present application, it is characterized in that the first condition comprises:

overlapping with the reference time-domain resource set in a time domain.

According to one aspect of the present application, it is characterized in that the first condition comprises: being orthogonal to the reference time-domain resource set in a time domain.

As one embodiment, benefits of using the above method comprise: being applicable to different application scenarios/environments/modes, thereby increasing the flexibility of the system.

As one embodiment, the above method supports a flexible duplex mode, improves the uplink coverage, and increases the uplink transmission capacity.

As one embodiment, benefits of using the above method comprise: supporting channel measurement in SBFD and non-SBFD modes, and by selecting an appropriate transmission opportunity set used for the channel measurement, CSI reporting for a given duplex mode (such as SBFD, full duplex, and half duplex) may be obtained.

According to one aspect of the present application, it is characterized in that a second higher layer parameter is used for determining that the first condition either comprises overlapping with the reference time-domain resource set in a time domain or comprises being orthogonal to the reference time-domain resource set in a time domain.

As one embodiment, the above method selects an appropriate transmission opportunity of an RS resource through the second higher layer parameter, and supports CSI reporting in different duplex modes.

As one embodiment, the above method selects an appropriate transmission opportunity of an RS resource through the second higher layer parameter, and supports CSI reporting in different application scenarios/environments/-modes.

According to one aspect of the present application, it is characterized in that the first CSI configuration comprises a first higher layer parameter set to 'Configured', the first RS resource is one RS resource in the first RS resource set, and the first opportunity set comprises one latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource.

As one embodiment, the above method improves the estimation precision of a channel and/or interference, thereby increasing the transmission reliability, and improving the performance of the system.

As one embodiment, benefits of using the above method comprise: improving the CSI estimation precision.

As one embodiment, benefits of using the above method comprise: being applicable to different application scenarios/environments/modes, thereby increasing the flexibility of the system.

As one embodiment, benefits of using the above method comprise: simplifying the design of CSI measurement and reporting.

As one embodiment, benefits of the above method comprise: having good backward compatibility, and simplifying the system design.

The present application discloses a method for a second node used for wireless communication, characterized by comprising:

> sending a first information block, the first information block being used for determining a reference time-domain resource set, sending a first CSI reporting configuration, the first CSI reporting configuration indicating a first RS resource set, and the first RS resource set comprising one or more RS resources; and
> receiving first CSI reporting,
> wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

According to one aspect of the present application, it is characterized in that the first CSI reporting at least comprises a first resource indicator, the first resource indicator indicates a first RS resource, the first RS resource is one RS resource in the first RS resource set, and one or more transmission opportunities, which are not later than that of the CSI reference resource of the first CSI reporting and meet a first condition, of the first RS resource belong to a first opportunity set.

According to one aspect of the present application, it is characterized in that the reference time-domain resource set comprises one or more symbols, at least one symbol in the reference time-domain resource set is configured by a higher layer parameter as a DL symbol, and one or more subcarriers in the one or more DL symbols of the reference time-domain resource set are used for uplink transmission.

According to one aspect of the present application, it is characterized by comprising:

> the first transmitter sending a second information block,
> wherein the second information block is used for determining a reference frequency-domain resource set; and UL transmission in one or more DL symbols of the reference time-domain resource set belongs to the reference frequency-domain resource set in a frequency domain.

According to one aspect of the present application, it is characterized in that the first condition comprises: overlapping with the reference time-domain resource set in a time domain.

According to one aspect of the present application, it is characterized in that the first condition comprises: being orthogonal to the reference time-domain resource set in a time domain.

According to one aspect of the present application, it is characterized in that a second higher layer parameter is used for determining that the first condition either comprises overlapping with the reference time-domain resource set in a time domain or comprises being orthogonal to the reference time-domain resource set in a time domain.

According to one aspect of the present application, it is characterized in that the first CSI configuration comprises a first higher layer parameter set to 'Configured', the first RS resource is one RS resource in the first RS resource set, and the first opportunity set comprises one latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource.

The present application discloses a first node device used for wireless communication, characterized by comprising:

a first receiver receiving a first information block, the first information block being used for determining a reference time-domain resource set, receiving a first CSI reporting configuration, the first CSI reporting configuration indicating a first RS resource set, and the first RS resource set comprising one or more RS resources; and
a first transmitter sending first CSI reporting,
wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

The present application discloses a second node device used for wireless communication, characterized by comprising:

a second transmitter sending a first information block, the first information block being used for determining a reference time-domain resource set; sending a first CSI reporting configuration, the first CSI reporting configuration indicating a first RS resource set, and the first RS resource set comprising one or more RS resources; and
a second receiver receiving first CSI reporting,
wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, compared with a traditional solution, the present application has the following advantages:

- by determining an appropriate transmission opportunity of an RS resource, improving the accuracy of CSI reporting;
- being applicable to different application scenarios/environments/modes, thereby increasing the flexibility of the system;
- improving the system performance; and
- increasing the transmission capacity.

**Brief Description of the Drawings**

Other features, purposes and advantages of the present application will become more apparent by reading the detailed description of the non-limiting embodiments with reference to the following drawings:

FIG. 1 shows a flowchart of a first information block, a first CSI reporting configuration, and first CSI reporting according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;

FIG. 4 shows a schematic diagram of a first communication device and a second communication device according to one embodiment of the present application;

FIG. 5 shows a flowchart of wireless transmission according to one embodiment of the present application;

FIG. 6 shows a schematic diagram of a first RS resource, a first resource indicator and first CSI reporting according to one embodiment of the present application;

FIG. 7 shows a schematic diagram of a reference time-domain resource set according to one embodiment of the present application;

FIG. 8 shows a schematic diagram of a second information block and a reference frequency-domain resource set according to one embodiment of the present application;

FIG. 9 shows a schematic diagram of a first condition according to one embodiment of the present application;

FIG. 10 shows a schematic diagram of determination of the first condition according to one embodiment of the present application;

FIG. 11 shows a schematic diagram of a first CSI configuration and first CSI reporting according to one embodiment of the present application;

FIG. 12 shows a structural block diagram of a processing device used in a first node device according to one embodiment of the present application; and

FIG. 13 shows a structural block diagram of a processing device used in a second node device according to one embodiment of the present application.

Detailed Description of Embodiments

The technical solutions of the present application will be further explained in detail below in conjunction with drawings. It should be noted that, in the absence of conflicts, embodiments and features in the embodiments in the present application may be arbitrarily combined with each other.

**Embodiment 1**

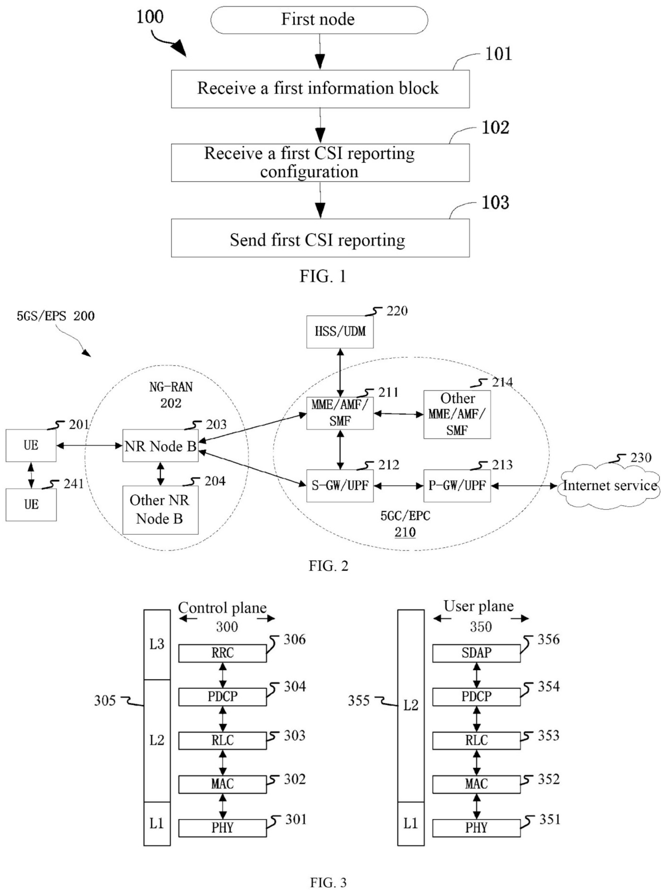

Embodiment 1 illustrates a flowchart of a first information block, a first CSI reporting configuration, and first CSI reporting according to one embodiment of the present application, as shown in FIG. 1. In 100 shown in FIG. 1, each block represents one step.

In Embodiment 1, the first node in the present application receives a first information block in step 101, the first information block being used for determining a reference time-domain resource set; receives a first CSI reporting configuration in step 102, the first CSI reporting configuration indicating a first RS resource set, and the first RS resource set comprising one or more RS resources; and sends first CSI reporting in step 103, wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, the first information block is carried by higher layer signaling.

As one embodiment, the first information block is carried by RRC (Radio Resource Control) signaling.

As one embodiment, the first information block comprises all or parts of fields in one RRC IE (Information Element).

As one embodiment, the first information block comprises all or parts of fields in each RRC IE of a plurality of RRC IEs.

As one embodiment, the first information block comprises all or parts of fields in a TDD-UL-DL-ConfigCommon IE.

As one embodiment, the first information block comprises all or parts of fields in a TDD-UL-DL-ConfigDedicated IE.

As one embodiment, the first information block comprises all or parts of fields in a ServingCellConfig IE.

As one embodiment, the first information block comprises all or parts of fields in a ServingCellConfigCommonSIB IE.

As one embodiment, the first information block comprises information in all or parts of fields in a ServingCell-ConfigCommon IE.

As one embodiment, the first information block is carried by at least one RRC IE.

As one embodiment, the name of one IE carrying the first information block comprises TDD-UL-DL-Config.

As one embodiment, the name of one IE carrying the first information block comprises ServingCellConfig.

As one embodiment, the first information block is carried by a MAC CE (Medium Access Control Layer Control Element).

As one embodiment, the first information block comprises a MAC CE.

As one embodiment, the first information block is transmitted on a downlink physical layer data channel (i.e., a downlink channel that can be used for carrying physical layer data).

As one embodiment, the first information block is transmitted on a PDSCH.

As one embodiment, the first information block is carried by DCI (Downlink Control Information).

As one embodiment, the first information block comprises DCI.

As one embodiment, the first information block comprises one or more fields in one piece of DCI.

As one embodiment, the first information block is carried by DCI format 2_0.

As one embodiment, the first information block comprises DCI format 2_0.

As one embodiment, the first information block is carried jointly by RRC signaling and a MAC CE.

As one embodiment, the first information block is carried jointly by higher layer signaling and DCI.

As one embodiment, the first information block is used for determining a reference time-domain resource set by the first node.

As one embodiment, the first information block indicates the reference time-domain resource set.

As one embodiment, the first information block is used for indicating the reference time-domain resource set.

As one embodiment, the first information block explicitly indicates the reference time-domain resource set.

As one embodiment, the first information block implicitly indicates the reference time-domain resource set.

As one embodiment, the first information block indicates a period and a time offset of the reference time-domain resource set.

As one embodiment, the first information block indicates a time-domain resource included in the reference time-domain resource set within one period.

As one embodiment, the first information block indicates symbols included in the reference time-domain resource set within one period.

As one embodiment, the first information block indicates slots included in the reference time-domain resource set within one period.

As one embodiment, the reference time-domain resource set comprises a positive integer number of symbols.

As one embodiment, the reference time-domain resource set comprises one or more symbols.

As one embodiment, the reference time-domain resource set comprises one symbol.

As one embodiment, the reference time-domain resource set comprises a plurality of symbols.

As one embodiment, the reference time-domain resource set comprises at least one slot.

As one embodiment, the reference time-domain resource set comprises at least one subframe.

As one embodiment, the symbol is a single-carrier symbol.

As one embodiment, the symbol is a multi-carrier symbol.

As one embodiment, the multi-carrier symbol is an OFDM (Orthogonal Frequency Division Multiplexing) symbol.

As one embodiment, the symbol is obtained after output of transform precoding undergoes OFDM symbol generation.

As one embodiment, the multi-carrier symbol is an SC-FDMA (Single Carrier - Frequency Division Multiple Access) symbol.

As one embodiment, the multi-carrier symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, the reference time-domain resource set comprises symbols simultaneously used for the uplink transmission and the downlink transmission.

As one embodiment, any symbol in the reference time-domain resource set may be simultaneously used for the uplink transmission and the downlink transmission.

As one embodiment, any symbol in the reference time-domain resource set is simultaneously used for the uplink transmission and the downlink transmission.

As one embodiment, at least one symbol in the reference time-domain resource set is simultaneously used for the uplink transmission and the downlink transmission.

As one embodiment, the reference time-domain resource set does not comprise symbols used for transmission of a first type of downlink signals, and the first type of downlink signals comprises one or more of an SS (Synchronisation Signal)/PBCH (physical broadcast channel) block, a CORESET (COntrol REsource SET) with an index of 0, or an SIB (System Information Block).

As one embodiment, the first CSI configuration comprises a first higher layer parameter set to 'notConfigured'.

As one embodiment, the first CSI configuration comprises a first higher layer parameter set to 'Configured'.

As one embodiment, the first higher layer parameter is timeRestrictionForChannelMeasurements.

As one embodiment, a name of the first higher layer parameter comprises timeRestrictionForChannelMeasurements.

As one embodiment, a name of the first higher layer parameter comprises timeRestriction.

As one embodiment, the specific definition of timeRestrictionForChannelMeasurements refers to Chapter 5.2 of 3GPP TS38.214.

As one embodiment, the first CSI (Channel Status Information) reporting configuration is carried by higher layer signaling.

As one embodiment, the first CSI reporting configuration is carried by RRC signaling.

As one embodiment, the first CSI reporting configuration comprises one RRC IE (Information Element).

As one embodiment, the first CSI reporting configuration comprises one or more RRC IEs.

As one embodiment, the first CSI reporting configuration is IE CSI-ReportConfig.

As one embodiment, a name of the first CSI reporting configuration comprises CSI-ReportConfig.

As one embodiment, the first CSI reporting configuration comprises a first CSI resource configuration, and the first CSI resource configuration indicates the first RS resource set.

As one sub-embodiment of the above embodiment, the first CSI resource configuration is one piece of IE CSI-ResourceConfig.

As one sub-embodiment of the above embodiment, the first CSI reporting configuration comprises a resourcesForChannelMeasurement field, and the resourcesForChannelMeasurement field included in the first CSI reporting configuration indicates the first CSI resource configuration.

As one embodiment, the first CSI reporting configuration comprises a plurality of CSI resource configurations, the first CSI resource configuration is one of the plurality of CSI resource configurations, and the first CSI resource configuration indicates the first RS resource set.

As one sub-embodiment of the above embodiment, other CSI resource configurations other than the first CSI resource configuration in the plurality of CSI resource configurations indicate a CSI-IM (Channel State Information - Interference Measurement) resource or at least CSI-IM in an NZP CSI-RS resource used for interference measurement.

As one sub-embodiment of the above embodiment, other CSI resource configurations other than the first CSI resource configuration in the plurality of CSI resource configurations indicate one or more RS resources used for interference measurement.

As one sub-embodiment of the above embodiment, the plurality of CSI resource configurations comprise two CSI resource configurations, and one CSI resource configuration in the two CSI resource configurations other than the first CSI resource configuration indicates one or more CSI-IM resources.

As one sub-embodiment of the above embodiment, the plurality of CSI resource configurations comprise three CSI resource configurations, and two CSI resource configurations in the three CSI resource configurations other than the first CSI resource configuration respectively indicate at least one CSI-IM (Channel State Information - Interference Measurement) resource and at least one NZP CSI-RS resource used for interference measurement.

As one embodiment, a first CSI resource configuration indicating the first RS resource set comprises an identifier or index of the first RS resource set.

As one embodiment, a first CSI resource configuration indicating the first RS resource set comprises an identifier or index of each RS resource in the first RS resource set.

As one embodiment, the first CSI reporting configuration comprises a resourcesForChannelMeasurement field, and the resourcesForChannelMeasurement field included in the first CSI reporting configuration indicates the first RS resource set.

As one embodiment, the first CSI configuration information comprises a csi-IM-ResourcesForInterference field, and the csi-IM-ResourcesForInterference field included in the first CSI configuration information indicates one or more CSI-IM resources. '

As one embodiment, the first CSI configuration information comprises a csi-IM-ResourcesForInterference field, and the csi-IM-ResourcesForInterference field included in the first CSI configuration information indicates one or more NZP CSI-RS resources used for interference measurement.

As one embodiment, the first CSI configuration information comprises an nzp-CSI-RS-ResourcesForInterference field, and the nzp-CSI-RS-ResourcesForInterference field included in the first CSI configuration information is used for indicating the third CSI resource configuration.

As one embodiment, the specific definitions of IE CSI-ReportConfig, resourcesForChannelMeasurement, and IE CSI-ResourceConfig refer to Chapter 6.3.2 of 3GPP TS 38.331.

As one embodiment, the first CSI reporting configuration comprises a reportConfigType (reporting configuration type) field; and the reportConfigType (reporting configuration type) field in the first CSI reporting configuration indicates which one of the first CSI reporting is it: periodic, semi persistent on PUSCH, semi persistent on PUCCH, or aperiodic.

As one embodiment, a channel measurement resource of the first CSI reporting configuration comprises the first RS resource set.

As one embodiment, a channel measurement resource of the first CSI reporting comprises the first RS resource set.

As one embodiment, a channel measurement resource of the first CSI reporting comprises part of RS resources in the first RS resource set.

As one embodiment, a channel measurement resource of the first CSI reporting comprises at least one RS resource in the first RS resource set.

Typically, a CSI-RS resource in the present application is an NZP (Non-Zero Power) CSI-RS resource.

As one embodiment, the first RS resource set comprises at least one of a CSI-RS (Channel State Information Reference Signal) resource or an SS/PBCH (Synchronization Signal/Physical Broadcast Channel) block resource.

As one embodiment, the first RS resource set comprises one or more CSI-RS resources.

As one embodiment, the first RS resource set comprises a plurality of CSI-RS resources.

As one embodiment, the first RS resource set comprises one or more SS/PBCH block resources.

As one embodiment, the first RS resource set comprises a plurality of SS/PBCH block resources.

As one embodiment, each RS resource in the first RS resource set is a CSI-RS resource or an SS/PBCH block resource.

As one embodiment, each RS resource in the first RS resource set is a CSI-RS resource.

As one embodiment, each RS resource in the first RS resource set is an SS/PBCH block resource.

As one embodiment, each RS resource in the first RS resource set is periodic, or semi-persistent, or aperiodic.

As one embodiment, each RS resource in the first RS resource set is periodic or semi-persistent.

As one embodiment, each RS resource in the first RS resource set is periodic.

As one embodiment, each RS resource in the first RS resource set is semi-persistent.

As one embodiment, one RS resource belongs to a plurality of slots in a time domain, wherein a part within one slot is one transmission opportunity of the one RS resource.

As one embodiment, one RS resource is a periodic RS resource or a semi-persistent RS resource, wherein a part within one period is one transmission opportunity of the one RS resource.

As one embodiment, one RS resource is aperiodic, and one trigger of the one RS resource is one transmission opportunity of the one RS resource.

As one embodiment, the first RS resource set comprises at least one periodic or semi-persistent CSI-RS resource.

As one embodiment, the CSI reference resource of the first CSI reporting is a frequency-domain resource targeted by the first CSI reporting in a frequency domain.

As one embodiment, the CSI reference resource of the first CSI reporting is a subband or broadband targeted by the first CSI reporting in a frequency domain.

As one embodiment, the CSI reference resource of the first CSI reporting and a frequency-domain resource targeted by the first CSI reporting belong to one identical BWP (Bandwidth Part) in a frequency domain.

As one embodiment, the CSI reference resource of the first CSI reporting is a first downlink slot in a time domain, the first downlink slot depends on a second uplink slot, and the second uplink slot is an uplink slot sending the first CSI reporting.

As one embodiment, the CSI reference resource of the first CSI reporting is a first downlink slot in a time domain.

As one embodiment, the CSI reference resource of the first CSI reporting is one downlink slot.

As one embodiment, the CSI reference resource of the first CSI reporting depends on a second uplink slot.

As one embodiment, the first downlink slot depends on a second uplink slot.

As one embodiment, the second uplink slot is an uplink slot n'.

As one embodiment, the second uplink slot is an uplink slot sending the first CSI reporting.

As one embodiment, the second uplink slot is an uplink slot where a PUCCH bearing the first CSI reporting is located.

As one embodiment, the second uplink slot is an uplink slot where a PUSCH bearing the first CSI reporting is located.

As one embodiment, the description of the CSI reference resource of the first CSI reporting refers to Chapter 5.2.2.5 of 3GPP TS38.214.

As one embodiment, the first downlink slot is a downlink slot $n - n_{CSI\_ref} - K_{offset} \cdot \dfrac{2^{\mu_{DL}}}{2^{\mu_{K_{offset}}}}$ , wherein $K_{offset}$ is configured by higher layer signaling, and $\mu_{K_{offset}}$ is a subcarrier spacing configuration of the $K_{offset}$.

As one embodiment, $n_{CSI\_ref}$ is a minimum value that is not less than $4 \cdot 2^{\mu_{DL}}$

As one embodiment, $n_{CSI\_ref}$ is a minimum value that is not less than $5 \cdot 2^{\mu_{DL}}$.

As one embodiment, the $n$ is a sum of a first component and a second component.

As one embodiment, the first component is one integer.

As one embodiment, the first component is $\left\lfloor n' \cdot \dfrac{2^{\mu_{DL}}}{2^{\mu_{UL}}} \right\rfloor$ , wherein $\mu_{DL}$ and $\mu_{UL}$ are respectively downlink and uplink subcarrier spacing configurations, and $\lfloor x \rfloor$ represents a round-down operation on *x*.

As one embodiment, the second component is one integer.

As one embodiment, the second component is $\left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$ , wherein $N_{\text{slot, offset}}^{\text{CA}}$ , and $\mu_{\textit{offset}}$ are configured by a higher layer parameter ca-SlotOffset. For detailed introduction, refer to Chapter 4.5 of 3GPP TS38.211.

As one embodiment, the *n* is $\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$ .

As one embodiment, the first downlink slot is a downlink slot $\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor - n_{CSI\_ref} - K_{offset} \cdot \frac{2^{\mu_{DL}}}{2^{\mu_{K_{offset}}}}$ .

As one embodiment, the first CSI reporting configuration is used for configuring one piece of aperiodic CSI reporting, and the first CSI reporting is one piece of aperiodic CSI reporting configured by the first CSI reporting configuration.

As one embodiment, the first CSI reporting configuration is used for configuring one piece of periodic or semi-persistent CSI reporting, and the first CSI reporting is a reporting instance of the periodic or semi-persistent CSI reporting configured by the first CSI reporting configuration.

As one embodiment, the first CSI reporting configuration is used for configuring one piece of periodic CSI reporting, and the first CSI reporting is a reporting instance of the periodic CSI reporting configured by the first CSI reporting configuration.

As one embodiment, the first CSI reporting configuration is used for configuring one piece of semi-persistent CSI reporting, and the first CSI reporting is a reporting instance of the semi-persistent CSI reporting configured by the first CSI reporting configuration.

As one embodiment, the first CSI reporting configuration is used for configuring a plurality of pieces of periodic CSI reporting, and the first CSI reporting is a reporting instance of one piece of periodic CSI reporting among the plurality of pieces of periodic CSI reporting.

As one embodiment, the first CSI reporting configuration is used for configuring a plurality of pieces of semi-persistent CSI reporting, and the first CSI reporting is a reporting instance of one piece of semi-persistent CSI reporting among the plurality of pieces of semi-persistent CSI reporting.

As one embodiment, the first CSI reporting configuration is used for configuring a plurality of pieces of aperiodic CSI reporting, and the first CSI reporting is one piece of aperiodic CSI reporting among the plurality of pieces of aperiodic CSI reporting.

As one embodiment, a reporting instance of one piece of periodic CSI reporting is reporting of the one piece of periodic CSI reporting within one period.

As one embodiment, a reporting instance of one piece of semi-persistent CSI reporting is reporting of the one piece of semi-persistent CSI reporting within one period.

As one embodiment, the first CSI reporting is transmitted on a physical channel.

As one embodiment, the first CSI reporting is transmitted on a PUSCH (Physical Uplink Shared Channel).

As one embodiment, the first CSI reporting is transmitted on a PUCCH (Physical Uplink Control Channel).

As one embodiment, the first CSI reporting is periodic or semi-persistent.

As one embodiment, the first CSI reporting is semi-persistent, and the first CSI reporting is activated by one MAC CE.

As one embodiment, a name of a MAC CE activating the first CSI reporting comprises SP CSI reporting on PUCCH Activation MAC CE.

As one embodiment, the first CSI reporting is aperiodic, the first CSI reporting is triggered by one piece of DCI (Downlink Control Information), the one piece of DCI comprises a CSI request field, the CSI request field of the one piece of DCI is used for indicating one trigger state, and the one trigger state indicates the first CSI reporting configuration.

As one embodiment, the first CSI reporting is semi-persistent, and when the first node receives one activation command, the first node sends the first CSI reporting on a PUCCH.

As one embodiment, the one activation command comprises SP CSI reporting on PUCCH Activation MAC CE.

As one embodiment, the first CSI reporting is semi-persistent, and when the first node is triggered by one piece of DCI, the first node sends the first CSI reporting on a PUSCH.

As one embodiment, the first CSI reporting configuration also indicates a report quantity included in the first CSI reporting.

As one embodiment, the first CSI reporting configuration comprises a reportQuantity field, and the field in the first CSI reporting configuration indicates a report quantity included in the first CSI reporting.

As one embodiment, a report quantity included in the first CSI reporting comprises at least one of a CQI (Channel Quality Indicator), a PMI (Precoding Matrix Indicator), a CRI (CSI-RS Resource Indicator), an SS/PBCH Block Resource Indicator (SSBRI), a Layer Indicator (LI), an RI (Rank Indicator), an L1-RSRP (Layer 1 Reference Signal Received Power) or an L1-SINR (Layer 1 Signal-to-Noise and Interference Ratio).

As one embodiment, the first CSI reporting comprises a CRI or an SSBRI, and an L1-RSRP.

As one embodiment, the first CSI reporting comprises a CRI or an SSBRI, and an L1-SINR.

As one embodiment, the first CSI reporting comprises a first resource indicator and an L1-RSRP.

As one embodiment, the first CSI reporting comprises a first resource indicator and an L1-SINR.

As one embodiment, the first CSI reporting at least comprises a first resource indicator.

As one embodiment, the first CSI reporting at least comprises a CRI.

As one embodiment, the first CSI reporting at least comprises a CQI.

As one embodiment, the first CSI reporting at least comprises a CRI and a CQI.

As one embodiment, the first CSI reporting at least comprises a CRI and a CQI, and the first resource indicator is a CRI.

As one embodiment, the first CSI reporting comprises a CRI, an RI, a PMI, and a CQI.

As one embodiment, the first CSI reporting comprises a CRI, an RI, an LI, a PMI, and a CQI.

As one embodiment, the first CSI reporting comprises a CRI, an RI, and a PMI.

As one embodiment, the first CSI reporting comprises a CRI, an RI, and a CQI.

As one embodiment, the first CSI reporting comprises a first resource indicator, an RI, a PMI, and a CQI, and the first resource indicator is a CRI.

As one embodiment, the first CSI reporting comprises a first resource indicator, an RI, an LI, a PMI, and a CQI, and the first resource indicator is a CRI.

As one embodiment, the first CSI reporting comprises a first resource indicator, an RI, and a PMI, and the first resource indicator is a CRI.

As one embodiment, the first CSI reporting comprises a first resource indicator, an RI, and a CQI, and the first resource indicator is a CRI.

As one embodiment, the first CSI reporting at least comprises a first resource indicator, the first resource indicator indicates a first RS resource, and the first RS resource is one RS resource in the first RS resource set.

As one embodiment, the first RS resource is a CSI-RS resource, and the first resource indicator is a CRI (CSI-RS Resource Indicator).

As one embodiment, the first RS resource is an SS/PBCH block resource, and the first resource indicator is an SSBRI (SS/PBCH Block Resource Indicator).

As one embodiment, the first RS resource set comprises a plurality of CSI-RS resources, and the first resource indicator is a CRI (CSI-RS Resource Indicator).

As one embodiment, the first RS resource set comprises a plurality of SS/PBCH block resources, and the first resource indicator is an SSBRI (SS/PBCH Block Resource Indicator).

As one embodiment, the meaning of "the first resource indicator indicates a first RS resource" refers to: the first resource indicator explicitly indicates a first RS resource.

As one embodiment, the meaning of "the first resource indicator indicates a first RS resource" refers to: the first resource indicator implicitly indicates a first RS resource.

As one embodiment, the meaning of "the first resource indicator indicates a first RS resource" refers to: the first resource indicator directly indicates a first RS resource.

As one embodiment, the meaning of "the first resource indicator indicates a first RS resource" refers to: the first resource indicator indirectly indicates a first RS resource.

As one embodiment, the meaning of "the first resource indicator indicates a first RS resource" refers to: the first resource indicator is used for indicating the first RS resource from the first RS resource set.

As one embodiment, the meaning of "the first resource indicator indicates a first RS resource" refers to: the first resource indicator is an ordering of the first RS resource in the first RS resource set.

As one embodiment, the meaning of "one transmission opportunity of one RS resource is later than that of a CSI reference resource of the first CSI reporting" comprises: a CSI reference resource of the first CSI reporting is a first downlink slot, the one transmission opportunity of the one RS resource belongs to one downlink slot, and the one downlink slot to which the one transmission opportunity of the one RS resource belongs is later than the first downlink slot; and the meaning of "one transmission opportunity of one RS resource is not later than that of a CSI reference resource of the first CSI reporting" comprises: a CSI reference resource of the first CSI reporting is a first downlink slot, the one transmission opportunity of the one RS resource belongs to one downlink slot, and the one downlink slot to which the one transmission opportunity of the one RS resource belongs is not later than the first downlink slot.

As one embodiment, the meaning of "one transmission opportunity of one RS resource is later than that of a CSI reference resource of the first CSI reporting" comprises: a starting moment of the one transmission opportunity of the one RS resource is later than an ending moment of a CSI reference resource of the first CSI reporting; and the meaning of "one transmission opportunity of one RS resource is not later than that of a CSI reference resource of the first CSI reporting" comprises: an ending moment of the one transmission opportunity of the one RS resource is not later than a starting moment of a CSI reference resource of the first CSI reporting.

As one embodiment, "a first opportunity set comprises at least one transmission opportunity, which is not later than that of a CSI reference resource of the first CSI reporting and meets a first condition, of at least one RS resource in the first RS resource set" refers to: a first opportunity set comprises one transmission opportunity, which is not later than that of a CSI reference resource of the first CSI reporting and meets a first condition, of a first RS resource, and the first RS resource is one RS resource in the first RS resource set.

As one sub-embodiment of the above embodiment, a first opportunity set is composed of one transmission opportunity, which is not later than that of a CSI reference resource of the first CSI reporting and meets a first condition, of a first RS resource.

As one sub-embodiment of the above embodiment, a first opportunity set comprises one transmission opportunity, which is not later than that of a CSI reference resource of the first CSI reporting and meets a first condition, of a first RS resource and one transmission opportunity, which is not later than that of the CSI reference resource of the first CSI reporting, of one RS resource other than the first RS resource in the first RS resource set.

As one sub-embodiment of the above embodiment, the first CSI configuration comprises a first higher layer parameter set to 'Configured'.

As one sub-embodiment of the above embodiment, the first CSI reporting comprises a first resource indicator, and the first resource indicator indicates the first RS resource.

As one embodiment, the meaning of "a first opportunity set comprises at least one transmission opportunity, which is not later than that of a CSI reference resource of the first CSI reporting and meets a first condition, of at least one RS resource in the first RS resource set" refers to: a first opportunity set comprises a plurality of transmission opportunities, which are not later than that of a CSI reference resource of the first CSI reporting and meet a first condition, of a first RS resource, and the first RS resource is one RS resource in the first RS resource set.

As one sub-embodiment of the above embodiment, a first opportunity set is composed of a plurality of transmission opportunities, which are not later than that of a CSI reference resource of the first CSI reporting and meet a first condition, of a first RS resource.

As one sub-embodiment of the above embodiment, a first opportunity set comprises a plurality of transmission opportunities, which are not later than that of a CSI reference resource of the first CSI reporting and meet a first condition, of a first RS resource and at least one transmission opportunity, which is not later than that of the CSI reference resource of the first CSI reporting, of one RS resource other than the first RS resource in the first RS resource set.

As one sub-embodiment of the above embodiment, the first CSI configuration comprises a first higher layer parameter set to 'Configured'.

As one sub-embodiment of the above embodiment, the first CSI configuration comprises a first higher layer parameter set to 'notConfigured'.

As one sub-embodiment of the above embodiment, the first CSI reporting comprises a first resource indicator, and the first resource indicator indicates the first RS resource.

As one embodiment, the meaning of "a first opportunity set comprises at least one transmission opportunity, which is not later than that of a CSI reference resource of the first CSI reporting and meets a first condition, of at least one RS resource in the first RS resource set" refers to: a first opportunity set comprises all transmission opportunities, which are not later than that of a CSI reference resource of the first CSI reporting and meet a first condition, of a first RS resource, and the first RS resource is one RS resource in the first RS resource set.

As one sub-embodiment of the above embodiment, a first opportunity set is composed of all transmission opportunities, which are not later than that of a CSI reference resource of the first CSI reporting and meet a first condition, of a first RS resource.

As one sub-embodiment of the above embodiment, a first opportunity set comprises all transmission opportunities, which are not later than that of a CSI reference resource of the first CSI reporting and meet a first condition, of a first RS resource and at least one transmission opportunity, which is not later than that of a CSI reference resource of the first CSI reporting, of one RS resource other than the first RS resource in the first RS resource set.

As one sub-embodiment of the above embodiment, the first CSI configuration comprises a first higher layer parameter set to 'notConfigured'.

As one sub-embodiment of the above embodiment, the first CSI reporting comprises a first resource indicator, and the first resource indicator indicates the first RS resource.

As one embodiment, the meaning of "a first opportunity set comprises at least one transmission opportunity, which is not later than that of a CSI reference resource of the first CSI reporting and meets a first condition, of at least one RS resource in the first RS resource set" refers to: a first opportunity set comprises one latest transmission opportunity, which is not later than that of a CSI reference resource of the first CSI reporting and meets a first condition, of a first RS resource, and the first RS resource is one RS resource in the first RS resource set.

As one sub-embodiment of the above embodiment, a first opportunity set is composed of one latest transmission opportunity, which is not later than that of a CSI reference resource of the first CSI reporting and meets a first condition, of a first RS resource.

As one sub-embodiment of the above embodiment, a first opportunity set comprises one latest transmission opportunity, which is not later than that of a CSI reference resource of the first CSI reporting and meets a first condition, of a first RS resource and one transmission opportunity, which is not later than that of a CSI reference resource of the first CSI reporting, of one RS resource other than the first RS resource in the first RS resource set.

As one sub-embodiment of the above embodiment, the first CSI configuration comprises a first higher layer parameter set to 'Configured'.

As one sub-embodiment of the above embodiment, the first CSI reporting comprises a first resource indicator, and the first resource indicator indicates the first RS resource.

As one embodiment, the meaning of "a first opportunity set comprises at least one transmission opportunity, which is not later than that of a CSI reference resource of the first CSI reporting and meets a first condition, of at least one RS resource in the first RS resource set" refers to: a first opportunity set comprises a plurality of latest transmission opportunities, which are not later than that of a CSI reference resource of the first CSI reporting and meet a first condition, of a first RS resource, and the first RS resource is one RS resource in the first RS resource set.

As one sub-embodiment of the above embodiment, a first opportunity set is composed of a plurality of latest transmission opportunities, which are not later than that of a CSI reference resource of the first CSI reporting and meet a first condition, of a first RS resource.

As one sub-embodiment of the above embodiment, a first opportunity set comprises a plurality of latest transmission opportunities, which are not later than that of a CSI reference resource of the first CSI reporting and meet a first condition, of a first RS resource and at least one transmission opportunity, which is not later than that of the CSI reference resource of the first CSI reporting, of one RS resource other than the first RS resource in the first RS resource set.

As one sub-embodiment of the above embodiment, the first CSI configuration comprises a first higher layer parameter set to 'Configured'.

As one sub-embodiment of the above embodiment, the first CSI configuration comprises a first higher layer parameter set to 'notConfigured'.

As one sub-embodiment of the above embodiment, the first CSI reporting comprises a first resource indicator, and the first resource indicator indicates the first RS resource.

As one embodiment, the meaning of "a first opportunity set comprises at least one transmission opportunity, which is not later than that of a CSI reference resource of the first CSI reporting and meets a first condition, of at least one RS resource in the first RS resource set" refers to: a first opportunity set comprises all latest transmission opportunities, which are not later than that of a CSI reference resource of the first CSI reporting and meet a first condition, of a first RS resource, and the first RS resource is one RS resource in the first RS resource set.

As one sub-embodiment of the above embodiment, a first opportunity set is composed of all latest transmission opportunities, which are not later than that of a CSI reference resource of the first CSI reporting and meet a first condition, of a first RS resource.

As one sub-embodiment of the above embodiment, a first opportunity set comprises all latest transmission opportunities, which are not later than that of a CSI reference resource of the first CSI reporting and meet a first condition, of a first RS resource and at least one transmission opportunity, which is not later than that of a CSI reference resource of the first CSI reporting, of one RS resource other than the first RS resource in the first RS resource set.

As one sub-embodiment of the above embodiment, the first CSI configuration comprises a first higher layer parameter set to 'notConfigured'.

As one sub-embodiment of the above embodiment, the first CSI reporting comprises a first resource indicator, and the first resource indicator indicates the first RS resource.

As one embodiment, the meaning of "a first opportunity set comprises at least one transmission opportunity, which is not later than that of a CSI reference resource of the first CSI reporting and meets a first condition, of at least one RS resource in the first RS resource set" refers to: a first opportunity set comprises at least one transmission opportunity, which is not later than that of a CSI reference resource of the first CSI reporting and meets a first condition, of each RS resource in the first RS resource set.

As one sub-embodiment of the above embodiment, the first CSI configuration comprises a first higher layer parameter set to 'Configured'.

As one embodiment, the meaning of "a first opportunity set comprises at least one transmission opportunity, which is not later than that of a CSI reference resource of the first CSI reporting and meets a first condition, of at least one RS resource in the first RS resource set" refers to: a first opportunity set comprises all transmission opportunities, which are not later than that of a CSI reference resource of the first CSI reporting and meet a first condition, of each RS resource in the first RS resource set.

As one sub-embodiment of the above embodiment, the first CSI configuration comprises a first higher layer parameter set to 'notConfigured'.

As one embodiment, the meaning of "a first opportunity set comprises at least one transmission opportunity, which is not later than that of a CSI reference resource of the first CSI reporting and meets a first condition, of at least one RS resource in the first RS resource set" refers to: a first opportunity set comprises at least one transmission opportunity, which is not later than that of a CSI reference resource of the first CSI reporting and meets a first condition, of each RS resource in at least one RS resource in the first RS resource set.

As one sub-embodiment of the above embodiment, the first CSI configuration comprises a first higher layer parameter set to 'Configured'.

As one embodiment, the meaning of "a first opportunity set comprises at least one transmission opportunity, which is not later than that of a CSI reference resource of the first CSI reporting and meets a first condition, of at least one RS resource in the first RS resource set" refers to: a first opportunity set comprises all transmission opportunities, which are not later than that of a CSI reference resource of the first CSI reporting and meet a first condition, of each RS resource in at least one RS resource in the first RS resource set.

As one sub-embodiment of the above embodiment, the first CSI configuration comprises a first higher layer parameter set to 'notConfigured'.

As one embodiment, the meaning of "the first opportunity set is used for obtaining channel measurement used for calculating the first CSI reporting" comprises: channel information measured in the first opportunity set is used for calculating the first CSI reporting.

As one embodiment, the meaning of "the first opportunity set is used for obtaining channel measurement used for calculating the first CSI reporting" comprises: part of channel information measured in the first opportunity set is used for calculating the first CSI reporting.

As one embodiment, the meaning of "the first opportunity set is used for obtaining channel measurement used for calculating the first CSI reporting" comprises: channel information measured for at least one RS resource in the first RS resource set included in the first opportunity set is used for calculating the first CSI reporting.

As one embodiment, the meaning of "the first opportunity set is used for obtaining channel measurement used for calculating the first CSI reporting" comprises: channel information measured for one RS resource in the first RS resource set included in the first opportunity set is used for calculating the first CSI reporting.

As one embodiment, the meaning of "the first opportunity set is used for obtaining channel measurement used for calculating the first CSI reporting" comprises: channel information measured for one transmission opportunity of any RS resource in at least one RS resource in the first RS resource set included in the first opportunity set is used for calculating the first CSI reporting.

As one embodiment, the meaning of "the first opportunity set is used for obtaining channel measurement used for calculating the first CSI reporting" comprises: channel information measured for at least one transmission opportunity of any RS resource in at least one RS resource in the first RS resource set included in the first opportunity set is used for calculating the first CSI reporting.

As one embodiment, how the first opportunity set is used for obtaining channel measurement used for calculating the first CSI reporting is independently determined by a manufacturer of the first node, or is implementation-dependent. A typical but non-limiting implementation is described below:

The first CSI reporting at least comprises a first resource indicator, the first resource indicator indicates a first RS resource, and the first RS resource is one RS resource in the first RS resource set; at least one transmission opportunity, which is not later than that of the CSI reference resource of the first CSI reporting, of the first RS resource belongs to the first opportunity set; and the first node performs measurement on the first opportunity set for obtaining a channel parameter matrix $H_{r \times t}$, wherein $r$, $t$ are respectively a number of receiving antennas and a number of antenna ports of the first RS resource.

As one embodiment, a plurality of pieces of CSI are respectively obtained by performing measurement on at least one RS resource in the first RS resource set, and the first CSI reporting comprises the best one of the plurality of pieces of CSI.

As one embodiment, a plurality of SINRs are respectively obtained by performing measurement on at least one RS resource in the first RS resource set, and the first CSI reporting comprises the best one of the plurality of SINRs.

As one embodiment, a plurality of RSRPs are respectively obtained by performing measurement on at least one RS resource in the first RS resource set, and the first CSI reporting comprises the best one of the plurality of RSRPs.

As one embodiment, a plurality of CQIs are respectively obtained by performing measurement on at least one RS resource in the first RS resource set, and the first CSI reporting comprises the best one of the plurality of CQIs.

As one embodiment, a plurality of SINRs are respectively obtained by performing measurement on at least one RS resource in the first RS resource set, and the first CSI reporting comprises the maximum one of the plurality of SINRs.

As one embodiment, a plurality of RSRPs are respectively obtained by performing measurement on at least one RS resource in the first RS resource set, and the first CSI reporting comprises the maximum one of the plurality of RSRPs.

As one embodiment, a plurality of RSRQs are respectively obtained by performing measurement on at least one RS resource in the first RS resource set, and the first CSI reporting comprises the best one of the plurality of RSRQs.

As one embodiment, the first CSI reporting is generated by performing channel measurement on at least one RS resource in the first RS resource set and according to a criterion of maximum transmission capacity.

As one embodiment, the first CSI reporting is generated by performing channel measurement on at least one RS resource in the first RS resource set and according to a criterion of maximum SINR.

As one embodiment, the first CSI reporting is generated by performing channel measurement on at least one RS resource in the first RS resource set and according to a criterion of maximum RSRP.

As one embodiment, the first CSI reporting is generated by performing channel measurement on at least one RS resource in the first RS resource set and according to a criterion of minimum BLER (Block Error Rate).

As one embodiment, the first CSI reporting is generated by performing channel measurement on at least one RS resource in the first RS resource set and according to a criterion of minimum UE implementation complexity.

As one embodiment, the first CSI reporting is generated by performing channel measurement on at least one RS resource in the first RS resource set and according to a criterion of minimum required computation time.

Under the limitations of the above method or embodiments, the specific algorithm for calculating the first CSI reporting is independently determined by a manufacturer of the first node, or is implementation-dependent. A typical but non-limiting implementation is described below:

the first CSI reporting comprises a first resource indicator and a CQI, the first resource indicator indicates a first RS resource, and the first RS resource is one RS resource in the first RS resource set; at least one transmission opportunity, which is not later than that of the CSI reference resource of the first CSI reporting, of the first RS resource belongs to the first opportunity set; the first node first performs measurement on the first opportunity set for obtaining a channel parameter matrix $H_{r \times t}$, wherein $r$, $t$ are respectively a number of receiving antennas and a number of antenna ports of the first RS resource; power adjustment is performed on the channel parameter matrix $H_{r \times t}$ and the adjusted channel parameter matrix is $\sqrt{P} \cdot H_{r \times t}$, wherein $P$ is an assumed ratio of PDSCH EPRE to CSI-RS EPRE; under the condition of using a precoding matrix $W_{t \times l}$, a precoded channel parameter matrix is $\sqrt{P} \cdot H_{r \times t} \cdot W_{t \times l}$, wherein $l$ is a rank or a number of layers, in one case, $l$ is a positive integer not greater than t, in another case, the precoding matrix is a unit matrix, and at this time, $t = l$; and an equivalent channel capacity of $H_{r \times t} \cdot W_{t \times l}$ is calculated using a criterion such as an SINR (Signal Interference Noise Ratio), EESM (Exponential Effective SINR Mapping), or an RBIR (Received Block Mean Mutual Information Ratio), and then a CQI included in the first CSI reporting is determined through table lookup or other ways by the equivalent channel capacity. Generally speaking, the calculation of the equivalent channel capacity requires the first node to estimate interference (comprising noise). The first CSI reporting configuration also indicates an RS resource used for interference measurement. The first node may perform measurement on one or more transmission opportunities of the RS resource for the interference measurement to obtain accurate measurement interference. In general, the direct mapping from the equivalent channel capacity to a value of the CQI depends on a receiver performance, or hardware-related factors such as a modulation scheme.

As one embodiment, when a time-domain resource occupied by the first CSI reporting belongs to the reference time-domain resource set, a frequency-domain resource occupied by the first CSI reporting belongs to the reference frequency-domain resource set.

As one embodiment, a time-domain resource occupied by the first CSI reporting is orthogonal to the reference time-domain resource set.

As one embodiment, when a time-domain resource occupied by the first CSI reporting overlaps with the reference time-domain resource set, a frequency-domain resource occupied by the first CSI reporting overlaps with the reference frequency-domain resource set.

As one embodiment, the time-domain resource in the present application comprises one or more symbols.

As one embodiment, the time-domain resource in the present application comprises a period of continuous or discontinuous time.

As one embodiment, the frequency-domain resource in the present application comprises one or more subcarriers.

As one embodiment, the frequency-domain resource in the present application comprises one or more RBs (Resource Blocks).

As one embodiment, the first condition comprises: overlapping with the reference time-domain resource set in a time domain.

As one embodiment, the first condition comprises: overlapping with the reference time-domain resource set in a time domain, and being orthogonal to a reference frequency-domain resource set in a frequency domain.

As one embodiment, the first condition comprises: overlapping with the reference time-domain resource set in a time domain, and comprising a frequency-domain resource being orthogonal to a reference frequency-domain resource set in a frequency domain.

As one embodiment, the first condition comprises: overlapping with the reference time-domain resource set in a time domain, and at least comprising a frequency-domain resource being orthogonal to a reference frequency-domain resource set in a frequency domain.

As one embodiment, the first condition comprises: overlapping with the reference time-domain resource set in a time domain, and comprising a frequency-domain resource in a reference frequency-domain resource set and a frequency-domain resource being orthogonal to the reference frequency-domain resource set in a frequency domain.

As one embodiment, the first condition comprises: being orthogonal to the reference time-domain resource set in a time domain.

As one embodiment, the meaning of "overlapping with the reference time-domain resource set in a time domain" refers to: partially or completely overlapping with the reference time-domain resource set in a time domain.

As one embodiment, the meaning of "overlapping with the reference time-domain resource set in a time domain" refers to: belonging to the reference time-domain resource set in a time domain.

As one embodiment, the meaning of "overlapping with the reference time-domain resource set in a time domain" refers to: any occupied symbol belongs to the reference time-domain resource set.

As one embodiment, the meaning of "belonging to the reference time-domain resource set in a time domain" refers to: any occupied symbol is one symbol in the reference time-domain resource set.

As one embodiment, the meaning of "overlapping with the reference time-domain resource set in a time domain" refers to: comprising at least one symbol in the reference time-domain resource set and at least one symbol other than the reference time-domain resource set in a time domain.

As one embodiment, the meaning of "being orthogonal to the reference time-domain resource set in a time domain" refers to: each occupied symbol does not belong to the reference time-domain resource set.

As one embodiment, the meaning of "being orthogonal to the reference time-domain resource set in a time domain" refers to: each occupied symbol is a symbol other than the reference time-domain resource set.

As one embodiment, the meaning of "being orthogonal to a reference frequency-domain resource set in a frequency domain" refers to: each occupied subcarrier does not belong to a reference frequency-domain resource set.

As one embodiment, the meaning of "being orthogonal to a reference frequency-domain resource set in a frequency domain" refers to: each occupied RB does not belong to a reference frequency-domain resource set.

As one embodiment, the meaning of "overlapping with a reference frequency-domain resource set in a frequency domain" refers to: partially or completely overlapping with a reference frequency-domain resource set in a frequency domain.

As one embodiment, the meaning of "overlapping with a reference frequency-domain resource set in a frequency domain" refers to: belonging to a reference frequency-domain resource set in a frequency domain.

As one embodiment, the meaning of "overlapping with a reference frequency-domain resource set in a frequency domain" refers to: any occupied subcarrier belongs to a reference frequency-domain resource set.

As one embodiment, the meaning of "belonging to a reference frequency-domain resource set in a frequency domain" refers to: any occupied subcarrier is one subcarrier in a reference frequency-domain resource set.

As one embodiment, the meaning of "overlapping with a reference frequency-domain resource set in a frequency domain" refers to: comprising at least one subcarrier in a reference frequency-domain resource set and at least one subcarrier other than the reference frequency-domain resource set in a frequency domain.

As one embodiment, the meaning of "overlapping with a reference frequency-domain resource set in a frequency domain" refers to: any occupied RB belongs to a reference frequency-domain resource set.

As one embodiment, the meaning of "belonging to a reference frequency-domain resource set in a frequency domain" refers to: any occupied RB is one RB in a reference frequency-domain resource set.

As one embodiment, the meaning of "overlapping with a reference frequency-domain resource set in a frequency domain" refers to: comprising at least one RB in a reference frequency-domain resource set and at least one RB other than the reference frequency-domain resource set in a frequency domain.

## Embodiment 2

Embodiment 2 illustrates a schematic diagram of a network architecture according to one embodiment of the present application, as shown in FIG. 2.

FIG. 2 explains a network architecture 200 of LTE (Long-Term Evolution), LTE-A (Long-Term Evolution Advanced), and future 5G systems. The network architecture 200 of the LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with the UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but for simplicity, these entities/interfaces are not shown. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B(gNB)203 and other gNB204. The gNB203 provides user and control plane protocol termination toward the UE201. The gNB203 may be connected to other gNB204 via an Xn interface (e.g., backhaul). The gNB203 may also be referred to as a base station, a base station transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similar functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function)211, other MME/AMF/SMF214, an S-GW (Service Gateway)/UPF (User Plane Function)212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted by the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching service.

As one embodiment, the first node in the present application comprises the UE201.

As one embodiment, the first node in the present application comprises the UE241.

As one embodiment, the second node in the present application comprises the gNB203.


## Embodiment 3

Embodiment 3 illustrates a schematic diagram of an embodiment of a wireless protocol architecture for a user plane and a control plane according to one embodiment of the present application, as shown in FIG. 3.

Embodiment 3 shows a schematic diagram of an embodiment of one wireless protocol architecture for a user plane and a control plane according to the present application, as shown in FIG. 3. FIG. 3 is a schematic diagram explaining an embodiment of a radio protocol architecture for a user plane 350 and a control plane 300. FIG. 3 shows the radio protocol architecture of the control plane 300 used between a first communication node device (UE, a gNB, or an RSU in V2X) and a second communication node device (a gNB, UE, or an RSU in V2X), or between two pieces of UE using three layers: a Layer 1, a Layer 2, and a Layer 3. The Layer 1 (L1 layer) is the lowest layer and implements various PHY (physical layer) signal processing functions. The L1 layer will be referred to as PHY301 herein. The Layer 2 (L2 layer) 305 is above the PHY301, and is responsible for a link between the first communication node device and the second communication node device or between two pieces of UE. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearer and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at another end (e.g., remote UE, a server, etc.) of the connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first information block is generated in the RRC sublayer 306.

As one embodiment, the first information block is generated in the MAC sublayer 302.

As one embodiment, the first information block is generated in the MAC sublayer 352.

As one embodiment, the first information block is generated in the PHY301.

As one embodiment, the first information block is generated in the PHY351.

As one embodiment, the second information block is generated in the RRC sublayer 306.

As one embodiment, the second information block is generated in the MAC sublayer 302.

As one embodiment, the second information block is generated in the MAC sublayer 352.

As one embodiment, the second information block is generated in the PHY301.

As one embodiment, the second information block is generated in the PHY351.

As one embodiment, the first CSI reporting configuration is generated in the RRC sublayer 306.

As one embodiment, the first CSI reporting is generated in the PHY301.

As one embodiment, the first CSI reporting is generated in the PHY351.

As one embodiment, the higher layer in the present application refers to a layer above a physical layer.

As one embodiment, the higher layer in the present application refers to an RRC layer.

As one embodiment, the higher layer in the present application refers to a MAC layer.

As one embodiment, the higher layer in the present application comprises at least one of an RRC layer or a MAC layer.


**Embodiment 4**

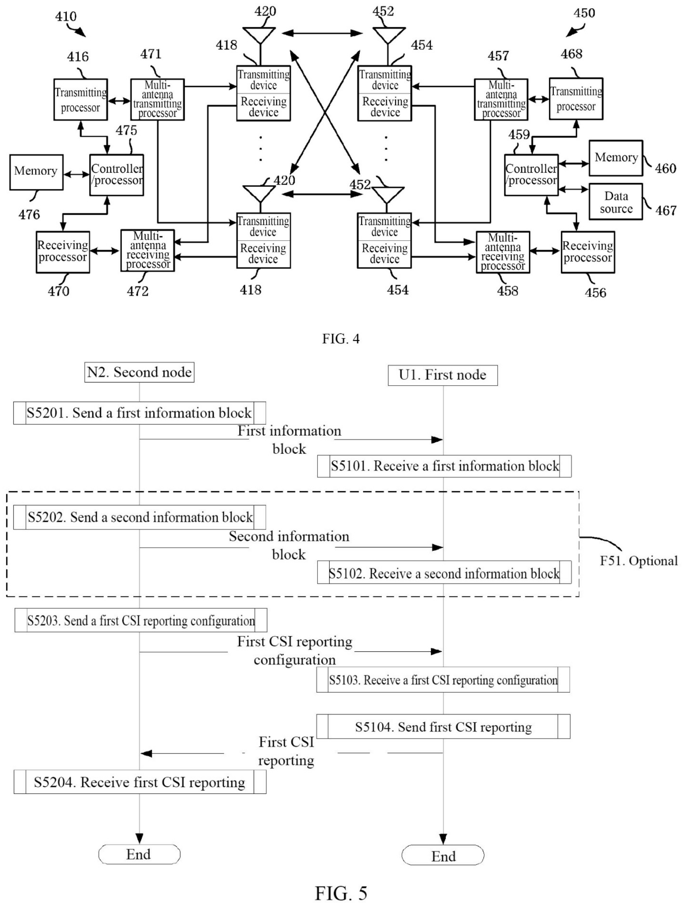

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper layer data packets from a core network are provided to the controller/processor 475. The controller/processor 475 implements the functionality of the L2 layer. In a DL, the controller/processor 475 provides header compression, encryption, packet segmentation and reordering, multiplexing between logical and transport channels, and radio resource assignment to the second communication device 450 based on various priority metrics. The controller/processor 475 is also responsible for an HARQ operation and retransmission of a lost packet, and for signaling to the second communication device 450. The transmitting processor 416 and the multi-antenna transmitting processor 471 implement various signal processing functions for the L1 layer (i.e., physical layer). The transmitting processor 416 implements encoding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or a frequency domain, and then uses an inverse fast Fourier transform (IFFT) to generate a physical channel carrying a time-domain multi-carrier symbol stream. The multi-antenna transmitting processor 471 then performs sending analog precoding/-beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operations. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any parallel stream destined for the second communication device 450. Symbols on each parallel stream are demodulated and recovered in the receiving processor 456, and a soft decision is generated. The receiving processor 456 then decodes and deinterleaves the soft decision to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the DL (DownLink), the controller/processor 459 provides demultiplexing between transport and logical channels, packet reassembly, decryption, header decompression, and control signal processing to recover the upper-layer data packets from the core network. The upper layer data packets are then provided to all protocol layers above the L2 layer. Various control signals may also be provided to the L3 for L3 processing. The controller/processor 459 is also responsible for error detection using an acknowledgement (ACK) and/or negative acknowledgement (NACK) protocol to support HARQ operations.

In the transmission from the second communication device 450 to the first communication device 410, at the second communication device 450, the data source 467 is used for providing the upper layer data packets to the controller/processor 459. The data source 467 represents all protocol layers above the L2 layer. Similar to a sending function at the first communication device 410 described in the DL, the controller/processor 459 implements header compression, encryption, packet segmentation and reordering, and multiplexing between logical and transport channels based on the radio resource assignment of the first communication device 410, and implements functions of the L2 layer for the user plane and the control plane. The controller/processor 459 is also responsible for an HARQ operation and retransmission of a lost packet, and for signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. The controller/processor 475 provides demultiplexing between transport and logical channels, packet reassembly, decryption, header decompression, and control signal processing to recover upper-layer data packets from the second communication device 450. The upper layer data packets from the controller/processor 475 can be provided to the core network. The controller/processor 475 is also responsible for error detection using the ACK and/or NACK protocol to support the HARQ operation.

As one embodiment, the second communication device 450 comprises: at least one processor and at least one memory, the at least one memory comprising computer program code; and the at least one memory and the computer program code are configured to be used together with the at least one processor. The second communication device 450 apparatus at least: receives a first information block, the first information block being used for determining a reference time-domain resource set; receives a first CSI reporting configuration, the first CSI reporting configuration indicating a first RS resource set, and the first RS resource set comprising one or more RS resources; and sends first CSI reporting, wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, the second communication device 450 comprises: a memory storing a computer-readable instruction program, the computer-readable instruction program generating actions when executed by at least one processor, and the actions comprising: receiving a first information block, the first information block being used for determining a reference time-domain resource set; receiving a first CSI reporting configuration, the first CSI reporting configuration indicating a first RS resource set, and the first RS resource set comprising one or more RS resources; and sending first CSI reporting, wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, the first communication device 410 comprises: at least one processor and at least one memory, the at least one memory comprising computer program code, and the at least one memory and the computer program code are configured to be used together with the at least one processor. The first communication device 410 apparatus at least: sends a first information block, the first information block being used for determining a reference time-domain resource set; sending a first CSI reporting configuration, the first CSI reporting configuration indicating a first RS resource set, and the first RS resource set comprising one or more RS resources; and receives first CSI reporting, wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, the first communication device 410 comprises: a memory storing a computer-readable instruction program, the computer-readable instruction program generating actions when executed by at least one processor, and the actions comprising: sending a first information block, the first information block being used for determining a reference time-domain resource set; sending a first CSI reporting configuration, the first CSI reporting configuration indicating a first RS resource set, and the first RS resource set comprising one or more RS resources; and receiving first CSI reporting, wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first CSI reporting configuration in the present application; and at least one of {the antenna 420, the transmitting device 418, the transmitting processor 416, the multi-antenna transmitting processor 471, the controller/-processor 475, and the memory 476} is used for sending the first CSI reporting configuration in the present application.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the transmitting device 454, the transmitting processor 468, the multi-antenna transmitting processor 457, the controller/processor 459, and the memory 460} is used for sending the first CSI reporting in the present application; and at least one of {the antenna 420, the receiving device 418, the receiving processor 470, the multi-antenna receiving processor 472, the controller/processor 475, and the memory 476} is used for receiving the first CSI reporting in the present application.

As one embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for transmitting the second information block in the present application.

**Embodiment 5**

Embodiment 5 illustrates a flowchart of wireless transmission according to one embodiment of the present application, as shown in FIG. 5. In FIG. 5, a first node U1 and a second node N2 are respectively two communication nodes for transmission through an air interface, wherein the step in block F51 is optional.

For **the first node U1,** a first information block is received in step S5101; a second information block is received in step S5102; a first CSI reporting configuration is received in step S5103; and first CSI reporting is sent in step S5104.

For **the second node N2,** a first information block is sent in step S5201; a second information block is sent in step S5202; a first CSI reporting configuration is sent in step S5203; and first CSI reporting is received in step S5204.

In Embodiment 5, the first information block is used for determining a reference time-domain resource set; the first CSI reporting configuration indicates a first RS resource set, and the first RS resource set comprises one or more RS resources; a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, the air interface between the second node N2 and the first node U1 comprises a wireless interface between a relay node device and user equipment.

As one embodiment, the air interface between the second node N2 and the first node U1 comprises a wireless interface between user equipment and user equipment.

As one embodiment, the first information block and the second information block belong to one identical RRC IE.

As one embodiment, the first information block and the second information block respectively belong to two RRC IEs.

As one embodiment, the first information block and the second information block are received simultaneously.

As one embodiment, the first information block and the second information block are received together.

As one embodiment, the first information block is received earlier than the second information block.

As one embodiment, the first information block is received not earlier than the second information block.

As one embodiment, the first information block is received earlier than the first CSI reporting configuration.

As one embodiment, the second information block is received earlier than the first CSI reporting configuration.

As one embodiment, the first information block is received earlier than sending of the first CSI reporting.

As one embodiment, the second information block is received earlier than sending of the first CSI reporting.

As one embodiment, the first information block is transmitted in a PDSCH (Physical Downlink Shared Channel).

As one embodiment, the first information block is transmitted in a PDCCH (Physical Downlink Control Channel).

As one embodiment, the second information block is transmitted in a PDCCH.

As one embodiment, the second information block is transmitted in a PDSCH.

As one embodiment, the first CSI reporting configuration is transmitted in a PDSCH.

As one embodiment, the first CSI reporting is transmitted in a PUSCH (Physical Uplink Shared Channel).

As one embodiment, the first CSI reporting is transmitted in a PUCCH (Physical Uplink Control Channel).

As one embodiment, the first CSI reporting is periodic or semi-persistent.

As one embodiment, the first CSI reporting is activated or deactivated by one MAC CE.

As one embodiment, a name of a MAC CE activating the first CSI reporting comprises SP CSI reporting on PUCCH Activation MAC CE.

As one embodiment, a name of a MAC CE deactivating the first CSI reporting comprises SP CSI reporting on PUCCH Deactivation MAC CE.

As one embodiment, the first CSI reporting is triggered by one piece of DCI, the one piece of DCI comprises a CSI request field, the CSI request field of the one piece of DCI is used for indicating one trigger state, and the one trigger state is used by the first node U1 for sending the first CSI reporting.

As one embodiment, the first CSI reporting is semi-persistent, and when the first node U1 receives one activation command, the first node U1 sends the first CSI reporting on a PUCCH.

As one embodiment, the one activation command comprises SP CSI reporting on PUCCH Activation MAC CE.

As one embodiment, the first CSI reporting is semi-persistent, and when the first node U1 is triggered by the one piece of DCI, the first node U1 sends the first CSI reporting on a PUSCH.

As one embodiment, the first CSI reporting is aperiodic, and when the first node U1 is triggered by the one piece of DCI, the first node U1 sends the first CSI reporting on a PUSCH.

As one embodiment, the step in block F51 of FIG. 5 exists, and the above method for the first node U1 used for wireless communication comprises: receiving a second information block, wherein the second information block is used for determining a reference frequency-domain resource set; and UL transmission in one or more DL symbols of the reference time-domain resource set belongs to the reference frequency-domain resource set in a frequency domain.

As one embodiment, the step in block F51 of FIG. 5 exists, and the above method for the second node N2 used for wireless communication comprises: sending a second information block, wherein the second information block is used for determining a reference frequency-domain resource set; and UL transmission in one or more DL symbols of the reference time-domain resource set belongs to the reference frequency-domain resource set in a frequency domain.

**Embodiment 6**

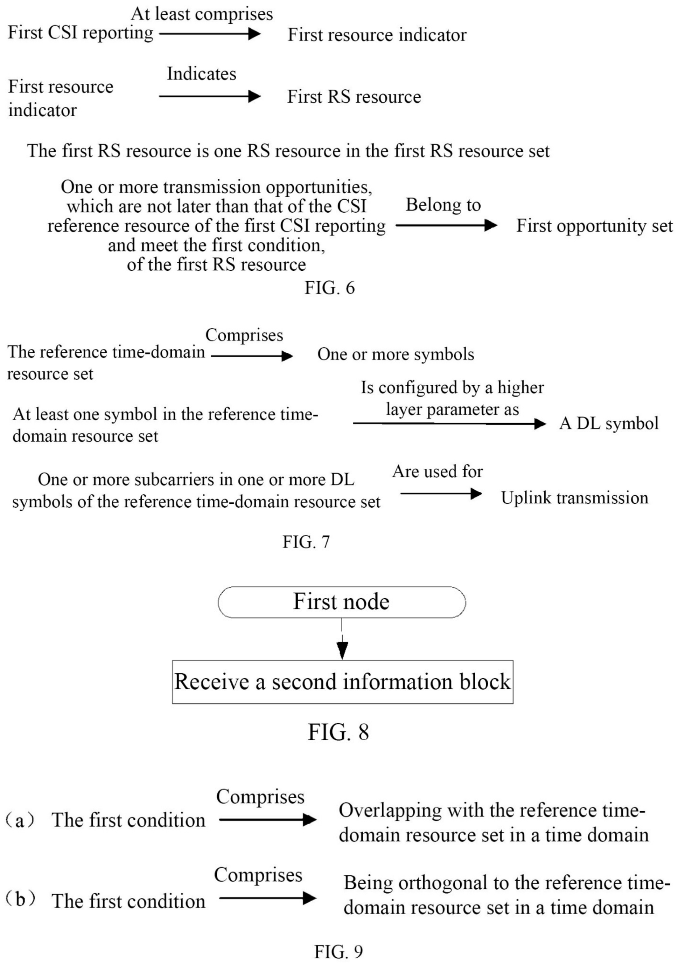

Embodiment 6 illustrates a schematic diagram of a first RS resource, a first resource indicator, and first CSI reporting according to one embodiment of the present application, as shown in FIG. 6.

In Embodiment 6, the first CSI reporting at least comprises a first resource indicator, the first resource indicator indicates a first RS resource, the first RS resource is one RS resource in the first RS resource set, and one or more transmission opportunities, which are not later than that of the CSI reference resource of the first CSI reporting and meet the first condition, of the first RS resource belong to the first opportunity set.

As one embodiment, the first opportunity set is composed of one or more transmission opportunities, which are not later than that of the CSI reference resource of the first CSI reporting and meet the first condition, of the first RS resource.

As one embodiment, one or more latest transmission opportunities, which are not later than that of the CSI reference resource of the first CSI reporting and meet the first condition, of the first RS resource belong to the first opportunity set.

As one sub-embodiment of the above embodiment, the first CSI configuration comprises a first higher layer parameter set to 'Configured'.

As one embodiment, one latest transmission opportunity, which is not later than that of the CSI reference resource of the first CSI reporting and meets the first condition, of the first RS resource belongs to the first opportunity set.

As one sub-embodiment of the above embodiment, the first CSI configuration comprises a first higher layer parameter set to 'Configured'.

As one embodiment, a plurality of latest transmission opportunities, which are not later than that of the CSI reference resource of the first CSI reporting and meet the first condition, of the first RS resource belong to the first opportunity set.

As one sub-embodiment of the above embodiment, the first CSI configuration comprises a first higher layer parameter set to 'Configured'.

As one sub-embodiment of the above embodiment, the first CSI configuration comprises a first higher layer parameter set to 'notConfigured'.

As one embodiment, all transmission opportunities, which are not later than that of the CSI reference resource of the first CSI reporting and meet the first condition, of the first RS resource belong to the first opportunity set.

As one sub-embodiment of the above embodiment, the first CSI configuration comprises a first higher layer parameter set to 'notConfigured'.

As one embodiment, the first opportunity set is composed of one or more latest transmission opportunities, which are not later than that of the CSI reference resource of the first CSI reporting and meet the first condition, of the first RS resource.

As one sub-embodiment of the above embodiment, the first CSI configuration comprises a first higher layer parameter set to 'Configured'.

As one embodiment, the first opportunity set is composed of one latest transmission opportunity, which is not later than that of the CSI reference resource of the first CSI reporting and meets the first condition, of the first RS resource.

As one sub-embodiment of the above embodiment, the first CSI configuration comprises a first higher layer parameter set to 'Configured'.

As one embodiment, the first opportunity set is composed of a plurality of latest transmission opportunities, which are not later than that of the CSI reference resource of the first CSI reporting and meet the first condition, of the first RS resource.

As one sub-embodiment of the above embodiment, the first CSI configuration comprises a first higher layer parameter set to 'Configured'.

As one sub-embodiment of the above embodiment, the first CSI configuration comprises a first higher layer parameter set to 'notConfigured'.

As one embodiment, the first opportunity set is composed of all transmission opportunities, which are not later than that of the CSI reference resource of the first CSI reporting and meet the first condition, of the first RS resource.

As one sub-embodiment of the above embodiment, the first CSI configuration comprises a first higher layer parameter set to 'notConfigured'.

**Embodiment 7**

Embodiment 7 illustrates a schematic diagram of a reference time-domain resource set according to one embodiment of the present application, as shown in FIG. 7.

In Embodiment 7, the reference time-domain resource set comprises one or more symbols, at least one symbol in the reference time-domain resource set is configured by a higher layer parameter as a DL symbol, and one or more subcarriers in the one or more DL symbols of the reference time-domain resource set are used for uplink transmission.

As one embodiment, one or more RBs in one or more DL symbols of the reference time-domain resource set are used for uplink transmission.

As one embodiment, each symbol in the reference time-domain resource set is configured by a higher layer parameter as a DL symbol.

As one embodiment, each symbol in the reference time-domain resource set is configured by a higher layer parameter as a DL symbol or a Flexible symbol.

As one embodiment, at least one symbol in the reference time-domain resource set is configured by a higher layer parameter as a DL symbol, and at least one symbol in the reference time-domain resource set is configured by a higher layer parameter as a Flexible symbol.

As one embodiment, the reference time-domain resource set is configured to one serving cell.

As one embodiment, the reference time-domain resource set is configured to a serving cell where the first RS resource set is located.

As one embodiment, the reference time-domain resource set is configured to at least one BWP (BandWidth Part).

As one embodiment, the reference time-domain resource set is configured to one BWP.

As one embodiment, the reference time-domain resource set is configured to one DL BWP.

As one embodiment, the reference time-domain resource set is configured to a DL BWP (BandWidth Part) where the first RS resource set is located.

As one embodiment, the higher layer parameter is carried by RRC (Radio Resource Control) signaling.

As one embodiment, the higher layer parameter comprises all or part of fields in one RRC IE (Information Element).

As one embodiment, the higher layer parameter comprises all or part of fields in each RRC IE among a plurality of RRC IEs.

As one embodiment, the higher layer parameter comprises all or part of fields in a TDD-UL-DL-ConfigCommon IE.

As one embodiment, the higher layer parameter comprises all or part of fields in a TDD-UL-DL-ConfigDedicated IE.

As one embodiment, the higher layer parameter comprises all or part of fields in a ServingCellConfig IE.

As one embodiment, the higher layer parameter comprises all or part of fields in a ServingCellConfigCommonSIB IE.

As one embodiment, the higher layer parameter comprises information in all or part of fields in a ServingCell-ConfigCommon IE.

As one embodiment, the higher layer parameter is carried by at least one RRC IE.

As one embodiment, a name of one IE carrying the higher layer parameter comprises TDD-UL-DL-Config.

As one embodiment, a name of one IE carrying the higher layer parameter comprises ServingCellConfig.

As one embodiment, the uplink transmission in one or more DL symbols of the reference time-domain resource set comprises at least one of a PUSCH (Physical Uplink Shared Channel), a PUCCH (Physical Uplink Control Channel), a PRACH (Physical Random-Access Channel), or an SRS (Sounding Reference Signal).

As one embodiment, the uplink transmission in one or more DL symbols of the reference time-domain resource set comprises a PUSCH.

As one embodiment, the uplink transmission in one or more DL symbols of the reference time-domain resource set comprises a PUCCH.

As one embodiment, the uplink transmission in one or more DL symbols of the reference time-domain resource set comprises a PRACH.

As one embodiment, the uplink transmission in one or more DL symbols of the reference time-domain resource set comprises an SRS.

**Embodiment 8**

Embodiment 8 illustrates a schematic diagram of a second information block and a reference frequency-domain resource set according to one embodiment of the present application, as shown in FIG. 8.

In Embodiment 8, the first receiver receives the second information block, wherein the second information block is used for determining a reference frequency-domain resource set; and UL transmission in one or more DL symbols of the reference time-domain resource set belongs to the reference frequency-domain resource set in a frequency domain.

As one embodiment, the second information block is carried by higher layer signaling.

As one embodiment, the second information block is carried by RRC signaling.

As one embodiment, the second information block comprises part or all of fields in one or more RRC IEs.

As one embodiment, the second information block comprises part of fields in one or more RRC IEs.

As one embodiment, the second information block comprises part of fields in a plurality of RRC IEs.

As one embodiment, the second information block comprises all or part of fields in one RRC IE (Information Element).

As one embodiment, the second information block comprises part of fields in one RRC IE (Information Element).

As one embodiment, the second information block is carried by MAC CE signaling.

As one embodiment, the second information block is carried by physical layer signaling.

As one embodiment, the second information block is carried by DCI signaling.

As one embodiment, at least one RS resource in the first RS resource set is orthogonal to the reference frequency-domain resource set in a frequency domain.

As one embodiment, at least one RS resource in the first RS resource set overlaps with the reference frequency-domain resource set in a frequency domain.

As one embodiment, at least one RS resource in the first RS resource set comprises at least one subcarrier in the reference frequency-domain resource set in a frequency domain.

As one embodiment, a frequency-domain resource occupied by at least one RS resource in the first RS resource set belongs to the reference frequency-domain resource set.

As one embodiment, a frequency-domain resource occupied by at least one RS resource in the first RS resource set comprises at least one subcarrier in the reference frequency-domain resource set and at least one subcarrier other than the reference frequency-domain resource set.

As one embodiment, any RS resource in the first RS resource set overlaps with the reference frequency-domain resource set in a frequency domain.

As one embodiment, any RS resource in the first RS resource set comprises at least one subcarrier in the reference frequency-domain resource set in a frequency domain.

As one embodiment, a frequency-domain resource occupied by any RS resource in the first RS resource set belongs to the reference frequency-domain resource set.

As one embodiment, a frequency-domain resource occupied by any RS resource in the first RS resource set comprises at least one subcarrier in the reference frequency-domain resource set and at least one subcarrier other than the reference frequency-domain resource set.

As one embodiment, a frequency-domain resource occupied by the first RS resource overlaps with the reference frequency-domain resource set.

As one embodiment, a frequency-domain resource occupied by the first RS resource comprises at least one subcarrier in the reference frequency-domain resource set.

As one embodiment, a frequency-domain resource occupied by the first RS resource belongs to the reference frequency-domain resource set.

As one embodiment, a frequency-domain resource occupied by the first RS resource comprises at least one subcarrier in the reference frequency-domain resource set and at least one subcarrier other than the reference frequency-domain resource set.

As one embodiment, when one transmission opportunity of the first RS resource belongs to the reference time-domain resource set in a time domain, reception of the one transmission opportunity of the first RS resource is abandoned.

As one embodiment, a frequency-domain resource occupied by the first RS resource overlaps with the reference frequency-domain resource set; and when one transmission opportunity of the first RS resource belongs to the reference time-domain resource set in a time domain, part of the one transmission opportunity of the first RS resource that does not belong to the reference frequency-domain resource set is received.

As one embodiment, when one transmission opportunity of one RS resource belongs to the reference time-domain resource set in a time domain, reception of the one transmission opportunity of the one RS resource is abandoned.

As one embodiment, a frequency-domain resource occupied by one RS resource overlaps with the reference frequency-domain resource set; and when one transmission opportunity of one RS resource belongs to the reference time-domain resource set in a time domain, part of the one transmission opportunity of the one RS resource that does not belong to the reference frequency-domain resource set is received.

As one embodiment, when one transmission opportunity of one CSI-RS resource belongs to the reference time-domain resource set in a time domain, reception of the one transmission opportunity of the one CSI-RS resource is abandoned.

As one embodiment, a frequency-domain resource occupied by one CSI-RS resource overlaps with the reference frequency-domain resource set; and when one transmission opportunity of one CSI-RS resource belongs to the reference time-domain resource set in a time domain, part of the one transmission opportunity of the one CSI-RS resource that does not belong to the reference frequency-domain resource set is received.

As one embodiment, the reference frequency-domain resource set comprises part or all of RBs of one DL BWP.

As one embodiment, the reference frequency-domain resource set comprises part of RBs of one DL BWP.

As one embodiment, the reference frequency-domain resource set comprises part or all of RBs of a DL BWP where the first RS resource set is located.

As one embodiment, the reference frequency-domain resource set comprises part or all of RBs of a serving cell where the first RS resource set is located.

As one embodiment, the reference frequency-domain resource set comprises part of RBs of a DL BWP where the first RS resource set is located.

As one embodiment, the reference frequency-domain resource set comprises part of RBs of a serving cell where the first RS resource set is located.

As one embodiment, on one serving cell, UL transmission in one or more DL symbols of the reference time-domain resource set belongs to the reference frequency-domain resource set in a frequency domain.

As one embodiment, on one BWP, UL transmission in one or more DL symbols of the reference time-domain resource set belongs to the reference frequency-domain resource set in a frequency domain.

As one embodiment, on one DL BWP, UL transmission in one or more DL symbols of the reference time-domain resource set belongs to the reference frequency-domain resource set in a frequency domain.

As one embodiment, on a serving cell where the first RS resource set is located, UL transmission in one or more DL symbols of the reference time-domain resource set belongs to the reference frequency-domain resource set in a frequency domain.

As one embodiment, on a DL BWP where the first RS resource set is located, UL transmission in one or more DL symbols of the reference time-domain resource set belongs to the reference frequency-domain resource set in a frequency domain.

As one embodiment, the second information block is used by the first node for determining a reference frequency-domain resource set.

As one embodiment, the second information block indicates a reference frequency-domain resource set.

As one embodiment, "the second information block indicates a reference frequency-domain resource set" refers to: the second information block explicitly indicates a reference frequency-domain resource set.

As one embodiment, "the second information block indicates a reference frequency-domain resource set" refers to: the second information block implicitly indicates a reference frequency-domain resource set.

As one embodiment, the second information block indicates a reference frequency-domain resource pool, and the reference frequency-domain resource set belongs to the reference frequency-domain resource pool.

As one embodiment, the second information block indicates a reference frequency-domain resource pool, and the reference frequency-domain resource set comprises at least one RB in the reference frequency-domain resource pool that overlaps with one DL BWP.

As one embodiment, the second information block indicates a reference frequency-domain resource pool, and the reference frequency-domain resource set comprises all RBs in the reference frequency-domain resource pool that overlap with one DL BWP.

As one embodiment, the second information block indicates a reference frequency-domain resource pool, and the reference frequency-domain resource set comprises at least one RB in the reference frequency-domain resource pool that overlaps with a DL BWP where the first RS resource set is located.

As one embodiment, the second information block indicates a reference frequency-domain resource pool, and the reference frequency-domain resource set comprises all RBs in the reference frequency-domain resource pool that overlap with a DL BWP where the first RS resource set is located.

## Embodiment 9

Embodiment 9 illustrates a schematic diagram of a first condition according to one embodiment of the present application, as shown in FIG. 9.

In Embodiment 9, in case (a), the first condition comprises: overlapping with the reference time-domain resource set in a time domain.

In Embodiment 9, in case (b), the first condition comprises: being orthogonal to the reference time-domain resource set in a time domain.

As one embodiment, the first condition comprises: partially or completely overlapping with the reference time-domain resource set in a time domain.

As one embodiment, the first condition comprises: belonging to the reference time-domain resource set in a time domain.

As one embodiment, the first condition comprises: any occupied symbol belongs to the reference time-domain resource set.

As one embodiment, the first condition comprises: any occupied symbol is one symbol in the reference time-domain resource set.

As one embodiment, the first condition comprises comprising at least one symbol in the reference time-domain resource set and at least one symbol other than the reference time-domain resource set in a time domain.

As one embodiment, the first condition comprises: each occupied symbol does not belong to the reference time-domain resource set.

As one embodiment, the first condition comprises: each occupied symbol is a symbol other than the reference time-domain resource set.

**Embodiment 10**

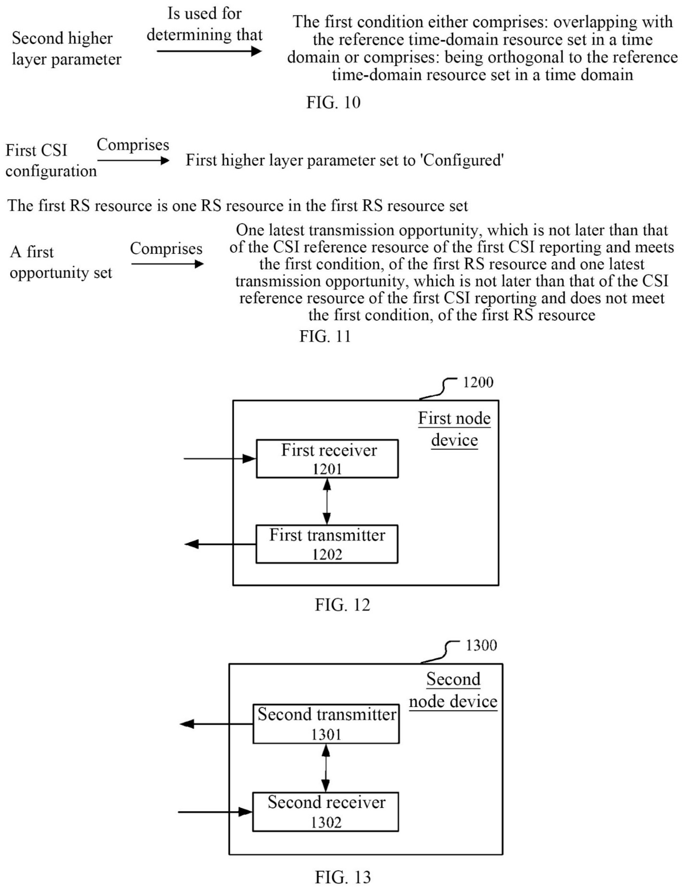

Embodiment 10 illustrates a schematic diagram of determination of a first condition according to one embodiment of the present application, as shown in FIG. 10.

In Embodiment 10, a second higher layer parameter is used for determining that the first condition either comprises: overlapping with the reference time-domain resource set in a time domain or comprises: being orthogonal to the reference time-domain resource set in a time domain.

As one embodiment, a second higher layer parameter is used by the first node for determining that the first condition either comprises: overlapping with the reference time-domain resource set in a time domain or comprises: being orthogonal to the reference time-domain resource set in a time domain.

As one embodiment, the second higher layer parameter belongs to the first CSI reporting configuration.

As one embodiment, the second higher layer parameter does not belong to the first CSI reporting configuration.

As one embodiment, different candidate values of the second higher layer parameter are respectively used for determining that the first condition either belongs to the reference time-domain resource set in a time domain or comprises: being orthogonal to the reference time-domain resource set in a time domain.

As one embodiment, when a value of the second higher layer parameter is a first candidate value, the first condition comprises: belonging to the reference time-domain resource set in a time domain; and when the value of the second higher layer parameter is a second candidate value, the first condition comprises: being orthogonal to the reference time-domain resource set in a time domain.

As one embodiment, any candidate value of the second higher layer parameter is a non-negative integer.

As one embodiment, any candidate value of the second higher layer parameter is a positive integer.

As one embodiment, any candidate value of the second higher layer parameter is a character or a character string.

As one embodiment, candidate values of the second higher layer parameter comprise 0 and 1.

As one embodiment, candidate values of the second higher layer parameter comprise 1 and 2.

As one embodiment, candidate values of the second higher layer parameter comprise notConfigured and Configured.

As one embodiment, candidate values of the second higher layer parameter comprise notConfigured and configured.

As one embodiment, candidate values of the second higher layer parameter comprise enabled and disabled.

As one embodiment, the first candidate value and the second candidate value are two different non-negative integers.

As one embodiment, the first candidate value and the second candidate value are two different positive integers.

As one embodiment, the first candidate value and the second candidate value are 0 and 1, respectively.

As one embodiment, the first candidate value and the second candidate value are 1 and 2, respectively.

As one embodiment, the second candidate value and the first candidate value are 0 and 1, respectively.

As one embodiment, the second candidate value and the first candidate value are 1 and 2, respectively.

As one embodiment, both the first candidate value and the second candidate value are a character or a character string.

As one embodiment, the first candidate value is notConfigured, and the second candidate value is Configured.

As one embodiment, the first candidate value is notConfigured, and the second candidate value is configured.

As one embodiment, the first candidate value is enabled, and the second candidate value is disabled.

As one embodiment, the second candidate value is notConfigured, and the first candidate value is Configured.

As one embodiment, the second candidate value is notConfigured, and the first candidate value is configured.

As one embodiment, the second candidate value is enabled, and the first candidate value is disabled.

As one embodiment, the first condition depends on whether a first time-domain resource overlaps with the reference time-domain resource set; when the first time-domain resource is orthogonal to the reference time-domain resource set, the first condition comprises: being orthogonal to the reference time-domain resource set in a time domain; and when the first time-domain resource belongs to the reference time-domain resource set, the first condition comprises: belonging to the reference time-domain resource set in the time domain.

As one embodiment, the first time-domain resource comprises a time-domain resource occupied by the first CSI reference resource of the first CSI reporting.

As one embodiment, the first time-domain resource comprises a time-domain resource occupied by the first CSI reporting.

As one embodiment, the first time-domain resource comprises a time-domain resource occupied by one latest transmission opportunity of the first RS resource.

As one embodiment, the first time-domain resource comprises a time-domain resource occupied by one latest transmission opportunity, which is not later than that of the CSI reference resource of the first CSI reporting, of the first RS resource.

As one embodiment, the first CSI reporting is triggered, and the first time-domain resource comprises a time-domain resource occupied by trigger signaling of the first CSI reporting.

As one sub-embodiment of the above embodiment, the trigger signaling of the first CSI reporting is physical layer signaling.

As one sub-embodiment of the above embodiment, the trigger signaling of the first CSI reporting is DCI signaling.

As one embodiment, the first CSI reporting is activated, and a first time-domain resource comprises a time-domain resource occupied by activation signaling of the first CSI reporting.

As one sub-embodiment of the above embodiment, the activation signaling of the first CSI reporting is MAC layer signaling.

As one sub-embodiment of the above embodiment, the activation signaling of the first CSI reporting is one MAC CE.

As one sub-embodiment of the above embodiment, the activation signaling of the first CSI reporting is SP CSI reporting on PUCCH Activation MAC CE.

## Embodiment 11

Embodiment 11 illustrates a schematic diagram of a first CSI configuration and first CSI reporting according to one embodiment of the present application, as shown in FIG. 11.

In Embodiment 11, the first CSI configuration comprises a first higher layer parameter set to 'Configured', the first RS resource is one RS resource in the first RS resource set, and the first opportunity set comprises one latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource.

As one embodiment, the first higher layer parameter is timeRestrictionForChannelMeasurements.

As one embodiment, a name of the first higher layer parameter comprises timeRestrictionForChannelMeasurements.

As one embodiment, a name of the first higher layer parameter comprises timeRestriction.

As one embodiment, candidate values of the first higher layer parameter comprise Configured and notConfigured.

As one embodiment, the first CSI configuration comprises the first higher layer parameter set to "Configured", and one transmission opportunity, which is not later than that of the CSI reference resource of the first CSI reporting and meets the first condition, of the first RS resource belongs to the first opportunity set.

As one embodiment, the first CSI configuration comprises the first higher layer parameter set to "Configured", and one transmission opportunity, which is not later than that of the CSI reference resource of the first CSI reporting and does not meet the first condition, of the first RS resource belongs to the first opportunity set.

As one embodiment, the first CSI configuration comprises the first higher layer parameter set to "Configured", and at least one transmission opportunity, which is not later than that of the CSI reference resource of the first CSI reporting and meets the first condition, of the first RS resource belongs to the first opportunity set.

As one embodiment, the first CSI configuration comprises the first higher layer parameter set to "Configured", and at least one transmission opportunity, which is not later than that of the CSI reference resource of the first CSI reporting and does not meet the first condition, of the first RS resource belongs to the first opportunity set.

As one embodiment, the first CSI configuration comprises the first higher layer parameter set to "Configured", and the first opportunity set comprises at least one latest transmission opportunity, which is not later than that of the CSI reference resource of the first CSI reporting and meets the first condition, of the first RS resource and at least one latest transmission opportunity, which is not later than that of the CSI reference resource of the first CSI reporting and does not meet the first condition, of the first RS resource.

As one embodiment, the first opportunity set comprises one or more transmission opportunities, which are not later than that of the CSI reference resource of the first CSI reporting and do not belong to the reference time-domain resource set in a time domain, of the first RS resource.

As one embodiment, the first opportunity set comprises one transmission opportunity, which is not later than that of the CSI reference resource of the first CSI reporting and does not belong to the reference time-domain resource set in a time domain, of the first RS resource.

As one embodiment, the first opportunity set comprises at least one transmission opportunity, which is not later than that of the CSI reference resource of the first CSI reporting and does not belong to the reference time-domain resource set in a time domain, of the first RS resource.

As one embodiment, the first opportunity set comprises a plurality of transmission opportunities, which are not later than that of the CSI reference resource of the first CSI reporting and do not belong to the reference time-domain resource set in a time domain, of the first RS resource.

As one embodiment, the first opportunity set comprises all transmission opportunities, which are not later than that of the CSI reference resource of the first CSI reporting and do not belong to the reference time-domain resource set in a time domain, of the first RS resource.

As one embodiment, the first opportunity set comprises a plurality of latest transmission opportunities, which are not later than that of the CSI reference resource of the first CSI reporting and do not belong to the reference time-domain resource set in a time domain, of the first RS resource.

As one embodiment, the first opportunity set comprises all latest transmission opportunities, which are not later than that of the CSI reference resource of the first CSI reporting and do not belong to the reference time-domain resource set in a time domain, of the first RS resource.

As one embodiment, the first opportunity set comprises one or more transmission opportunities, which are not later than that of the CSI reference resource of the first CSI reporting and belong to the reference time-domain resource set in a time domain, but are orthogonal to the reference frequency-domain resource set in a frequency domain, of the first RS resource.

As one embodiment, the first opportunity set comprises one transmission opportunity, which is not later than that of the CSI reference resource of the first CSI reporting and belongs to the reference time-domain resource set in a time domain, but is orthogonal to the reference frequency-domain resource set in a frequency domain, of the first RS resource.

As one embodiment, the first opportunity set comprises at least one transmission opportunity, which is not later than that of the CSI reference resource of the first CSI reporting and belongs to the reference time-domain resource set in a time domain, but is orthogonal to the reference frequency-domain resource set in a frequency domain, of the first RS resource.

As one embodiment, the first opportunity set comprises a plurality of transmission opportunities, which are not later than that of the CSI reference resource of the first CSI reporting and belong to the reference time-domain resource set in a time domain but are orthogonal to the reference frequency-domain resource set in a frequency domain, of the first RS resource.

As one embodiment, the first opportunity set comprises all transmission opportunities, which are not later than that of the CSI reference resource of the first CSI reporting and belong to the reference time-domain resource set in a time domain but are orthogonal to the reference frequency-domain resource set in a frequency domain, of the first RS resource.

As one embodiment, the first opportunity set comprises a plurality of latest transmission opportunities, which are not later than that of the CSI reference resource of the first CSI reporting and belong to the reference time-domain resource set in a time domain but are orthogonal to the reference frequency-domain resource set in a frequency domain, of the first RS resource.

As one embodiment, the first opportunity set comprises all latest transmission opportunities, which are not later than that of the CSI reference resource of the first CSI reporting and belong to the reference time-domain resource set in a time domain but are orthogonal to the reference frequency-domain resource set in a frequency domain, of the first RS resource.

## Embodiment 12

Embodiment 12 illustrates a structural block diagram of a processing device used in a first node device according to one embodiment of the present application, as shown in FIG. 12. In

FIG. 12, the processing device 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {the antenna 452, the receiving device 454, the receiving processor 456, the multi-antenna receiving processor 458, the controller/processor 459, the memory 460, and the data source 467} in Embodiment 4.

As one embodiment, the first transmitter 1202 comprises at least one of {the antenna 452, the transmitting device 454, the transmitting processor 468, the multi-antenna transmitting processor 457, the controller/processor 459, the memory 460, and the data source 467} in Embodiment 4.

The first receiver 1201 receives a first information block; and receives a first CSI reporting configuration; and the first transmitter 1202 sends first CSI reporting.

In Embodiment 12, the first information block is used for determining a reference time-domain resource set; the first CSI reporting configuration indicates a first RS resource set, and the first RS resource set comprises one or more RS resources; a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, the first CSI reporting at least comprises a first resource indicator, the first resource indicator indicates a first RS resource, the first RS resource is one RS resource in the first RS resource set, and one or more transmission opportunities, which are not later than that of the CSI reference resource of the first CSI reporting and meet the first condition, of the first RS resource belong to the first opportunity set.

As one embodiment, the reference time-domain resource set comprises one or more symbols, at least one symbol in the reference time-domain resource set is configured by a higher layer parameter as a DL symbol, and one or more subcarriers in the one or more DL symbols of the reference time-domain resource set are used for uplink transmission.

As one embodiment, it comprises:

the first receiver 1201 receiving a second information block,
wherein the second information block is used for determining a reference frequency-domain resource set; and UL transmission in one or more DL symbols of the reference time-domain resource set belongs to the reference frequency-domain resource set in a frequency domain.

As one embodiment, the first condition comprises: overlapping with the reference time-domain resource set in a time domain.

As one embodiment, the first condition comprises: being orthogonal to the reference time-domain resource set in a time domain.

As one embodiment, a second higher layer parameter is used for determining that the first condition either comprises: overlapping with the reference time-domain resource set in a time domain or comprises: being orthogonal to the reference time-domain resource set in a time domain.

As one embodiment, the first CSI configuration comprises a first higher layer parameter set to 'Configured', the first RS resource is one RS resource in the first RS resource set, and the first opportunity set comprises one latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource.

## Embodiment 13

Embodiment 13 illustrates a structural block diagram of a processing device used in a second node device according to one embodiment of the present application, as shown in FIG. 13. In FIG. 13, the processing device 1300 in the second node device comprises a second transmitter 1301 and a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {the antenna 420, the transmitting device 418, the transmitting processor 416, the multi-antenna transmitting processor 471, the controller/processor 475, and the memory 476} in Embodiment 4.

As one embodiment, the second receiver 1302 comprises at least one of {the antenna 420, the receiving device 418, the receiving processor 470, the multi-antenna receiving processor 472, the controller/processor 475, and the memory 476} in Embodiment 4.

The second transmitter 1301 sends a first information block; and sends a first CSI reporting configuration; and the second receiver 1302 sends first CSI reporting.

In Embodiment 13, the first information block is used for determining a reference time-domain resource set; the first CSI reporting configuration indicates a first RS resource set, and the first RS resource set comprises one or more RS resources; a first opportunity set comprises at least one transmission opportunity, which is not later than that of a CSI reference resource of the first CSI reporting and meets a first condition, of at least one RS resource in the first RS resource set, and the first condition depends on the reference time-domain resource set; and the first opportunity set is used for obtaining channel measurement used for calculating the first CSI reporting.

As one embodiment, the first CSI reporting at least comprises a first resource indicator, the first resource indicator indicates a first RS resource, the first RS resource is one RS resource in the first RS resource set, and one or more transmission opportunities, which are not later than that of the CSI reference resource of the first CSI reporting and meet the first condition, of the first RS resource belong to the first opportunity set.

As one embodiment, the reference time-domain resource set comprises one or more symbols, at least one symbol in the reference time-domain resource set is configured by a higher layer parameter as a DL symbol, and one or more subcarriers in the one or more DL symbols of the reference time-domain resource set are used for uplink transmission.

As one embodiment, it comprises:

the second transmitter 1301 sending a second information block,
wherein the second information block is used for determining a reference frequency-domain resource set; and UL transmission in one or more DL symbols of the reference time-domain resource set belongs to the reference frequency-domain resource set in a frequency domain.

As one embodiment, the first condition comprises: overlapping with the reference time-domain resource set in a time domain.

As one embodiment, the first condition comprises: being orthogonal to the reference time-domain resource set in a time domain.

As one embodiment, a second higher layer parameter is used for determining that the first condition either comprises: overlapping with the reference time-domain resource set in a time domain or comprises: being orthogonal to the reference time-domain resource set in a time domain.

As one embodiment, the first CSI configuration comprises a first higher layer parameter set to 'Configured', the first RS resource is one RS resource in the first RS resource set, and the first opportunity set comprises one latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource.

Those of ordinary skill in the art can understand that all or parts of the steps in the above method can be completed by instructing relevant hardware through a program, and the program can be stored in a computer-readable storage medium, such as a read-only memory, a hard disk or an optical disk. Optionally, all or parts of the steps in the above embodiments can also be implemented using one or more integrated circuits. Accordingly, each module unit in the above embodiments can be implemented in the form of hardware or in the form of a software function module. The present application is not limited to any specific form of software and hardware combinations. The user equipment, the terminal and the UE in the present application comprise but are not limited to a drone, a communication module on the drone, a remote-controlled airplane, an aircraft, a small airplane, a mobile phone, a tablet computer, a notebook computer, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer, and other wireless communication devices. The base stations or the system devices in the present application comprise but are not limited to a macrocell base station, a microcell base station, a Femtocell, a relay base station, a gNB (NR node B) NR node B, a TRP (Transmitter Receiver Point), and other wireless communication devices.

The above is only preferred embodiments of the present application and is not intended to limit the scope of protection of the present application. Any change and modification made based on the embodiments described in the description, if similar partial or complete technical effects can be obtained, should be deemed obvious and belong to the scope of protection of the present invention.

**Claims**

1. A first node device used for wireless communication, comprising:

    a first receiver receiving a first information block, the first information block being used for determining a reference time-domain resource set, the first information block being carried by RRC signaling, or the first information block comprising DCI, or the first information block being carried jointly by higher layer signaling and DCI; and receiving a first CSI reporting configuration, the first CSI reporting configuration indicating a first RS resource set, a channel measurement resource of the first CSI reporting configuration comprising the first RS resource set, the first RS resource set comprising one or more RS resources, and each RS resource in the first RS resource set being a CSI-RS resource or an SS/PBCH block resource; the reference time-domain resource set being configured to a serving cell where the first RS resource set is located; and
    a first transmitter sending first CSI reporting,
    wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; the first condition comprises: belonging to the reference time-domain resource set in a time domain, or the first condition comprises: being orthogonal to the reference time-domain resource set in a time domain; and the first opportunity set is used for obtaining channel measurement used for calculating the first CSI reporting.

2. The first node device according to claim 1, wherein each RS resource in the first RS resource set is a CSI-RS resource, and each RS resource in the first RS resource set is periodic or semi-persistent; each RS resource in the first RS resource set is a CSI-RS resource; and the first CSI reporting comprises a CRI, an RI, a PMI and a CQI, or the first CSI reporting comprises a CRI, an RI, an LI, a PMI and a CQI, or the first CSI reporting comprises a CRI, an RI and a PMI, or the first CSI reporting comprises a CRI, an RI and a CQI.

3. The first node device according to claim 1 or 2, wherein the first CSI reporting at least comprises a first resource indicator, the first resource indicator indicates a first RS resource, and the first RS resource is one RS resource in the first RS resource set; the first RS resource set comprises a plurality of CSI-RS resources, the first RS resource is a CSI-RS resource, and the first resource indicator is a CRI (CSI-RS Resource Indicator); or the first RS resource set comprises a plurality of SS/PBCH block resources, the first RS resource is an SS/PBCH block resource, and the first resource indicator is an SSBRI (SS/PBCH Block Resource Indicator); and one or more transmission opportunities, which are not later than that of the CSI reference resource of the first CSI reporting and meet the first condition, of the first RS resource belong to the first opportunity set.

4. The first node device according to claim 3, wherein the first CSI configuration comprises a first higher layer parameter set to 'Configured'; the first higher layer parameter is timeRestrictionForChannelMeasurements, or a name of the first higher layer parameter comprises timeRestrictionForChannelMeasurements; and one latest transmission opportunity, which is not later than that of the CSI reference resource of the first CSI reporting and meets the first condition, of the first RS resource belongs to the first opportunity set, or the first opportunity set is composed of one latest transmission opportunity, which is not later than that of the CSI reference resource of the first CSI reporting and meets the first condition, of the first RS resource.

5. The first node device according to claim 3, wherein the first CSI configuration comprises a first higher layer parameter set to 'notConfigured'; the first higher layer parameter is timeRestrictionForChannelMeasurements, or a name of the first higher layer parameter comprises timeRestrictionForChannelMeasurements; and the first opportunity set comprises all transmission opportunities, which are not later than that of a CSI reference resource of the first CSI reporting and meet a first condition, of a first RS resource.

6. The first node device according to any one of claims 1 to 3, wherein the first CSI configuration comprises a first higher layer parameter set to 'Configured'; the first higher layer parameter is timeRestrictionForChannelMeasurements, or a name of the first higher layer parameter comprises timeRestrictionForChannelMeasurements; and the first opportunity set comprises at least one transmission opportunity, which is not later than that of a CSI reference resource of the first CSI reporting and meets a first condition, of each RS resource in the first RS resource set.

7. The first node device according to any one of claims 1 to 3, wherein the first CSI configuration comprises a first higher layer parameter set to 'notConfigured'; the first higher layer parameter is timeRestrictionForChannelMeasurements, or a name of the first higher layer parameter comprises timeRestrictionForChannelMeasurements; and the first opportunity set comprises all transmission opportunities, which are not later than that of a CSI reference resource of the first CSI reporting and meet a first condition, of each RS resource in the first RS resource set.

8. The first node device according to any one of claims 1 to 7, wherein the first condition comprises: being orthogonal to the reference time-domain resource set in the time domain; and when one transmission opportunity of one CSI-RS resource belongs to the reference time-domain resource set in the time domain, reception of the one transmission opportunity of the one CSI-RS resource is abandoned.

9. The first node device according to any one of claims 1 to 8, wherein the first information block is used for indicating the reference time-domain resource set, or the first information block implicitly indicates the reference time-domain resource set.

10. The first node device according to any one of claims 1 to 9, wherein the first information block indicates a period and a time offset of the reference time-domain resource set, or the first information block indicates a time-domain resource included in the reference time-domain resource set within one period, or the first information block indicates a period and a time offset of the reference time-domain resource set, and the first information block indicates a time-domain resource included in the reference time-domain resource set within one period.

11. The first node device according to any one of claims 1 to 10, wherein the CSI reference resource of the first CSI reporting is a first downlink slot in the time domain, the first downlink slot depends on a second uplink slot, and the second uplink slot is an uplink slot sending the first CSI reporting.

12. The first node device according to claim 1, wherein the second uplink slot is an uplink slot $n'$, the first downlink slot is a downlink slot $n - n_{CSI\_ref} - K_{offset} \cdot \frac{2^{\mu_{DL}}}{2^{\mu_{K_{offset}}}}$, and the n is

$$\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor.$$

13. The first node device according to any one of claims 1 to 12, wherein the first CSI reporting configuration is IE CSI-ReportConfig, the first CSI reporting configuration comprises a first CSI resource configuration, the first CSI resource configuration is one piece of IE CSI-ResourceConfig, the first CSI reporting configuration comprises a resources-ForChannelMeasurement field, and the resourcesForChannelMeasurement field included in the first CSI reporting configuration indicates the first CSI resource configuration; the first CSI resource configuration indicates the first RS resource set, and the first CSI resource configuration indicating the first RS resource set comprises an identifier or index of the first RS resource set;
or the first CSI reporting configuration is IE CSI-ReportConfig, the first CSI reporting configuration comprises a plurality of CSI resource configurations, the first CSI resource configuration is one of the plurality of CSI resource configurations, and the first CSI resource configuration indicates the first RS resource set; and other CSI resource configurations other than the first CSI resource configuration in the plurality of CSI resource configurations indicate a CSI-IM (Channel State Information - Interference Measurement) resource or at least a CSI-IM resource in an NZP CSI-RS resource used for interference measurement.

14. The first node device according to any one of claims 1 to 13, wherein the first CSI reporting configuration is used for configuring one piece of periodic or semi-persistent CSI reporting, and the first CSI reporting is a reporting instance of the periodic or semi-persistent CSI reporting configured by the first CSI reporting configuration;
or the first CSI reporting is aperiodic, the first CSI reporting is triggered by one piece of DCI (Downlink Control Information), the one piece of DCI comprises a CSI request field, the CSI request field of the one piece of DCI is used for indicating one trigger state, and the one trigger state indicates the first CSI reporting configuration.

15. The first node device according to any one of claims 1 to 14, wherein each symbol in the reference time-domain resource set is configured by a higher layer parameter as a DL symbol, or each symbol in the reference time-domain resource set is configured by a higher layer parameter as a DL symbol or a Flexible symbol;
or the reference time-domain resource set comprises one or more symbols, at least one symbol in the reference time-domain resource set is configured by a higher layer parameter as a DL symbol, and one or more subcarriers in the one or more DL symbols of the reference time-domain resource set are used for uplink transmission.

16. The first node device according to any one of claims 1 to 15, comprising:

the first receiver receiving a second information block,

wherein the second information block is used for determining a reference frequency-domain resource set; and UL transmission in one or more DL symbols of the reference time-domain resource set belongs to the reference frequency-domain resource set in a frequency domain.

17. The first node device according to any one of claims 1 to 16, wherein the first CSI configuration comprises a first higher layer parameter set to 'Configured', the first RS resource is one RS resource in the first RS resource set, the first opportunity set comprises one latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource.

18. A second node device used for wireless communication, comprising:

a second transmitter sending a first information block, the first information block being used for determining a reference time-domain resource set; the first information block being carried by RRC signaling, or the first information block comprising DCI, or the first information block being carried jointly by higher layer signaling and DCI; and sending a first CSI reporting configuration, the first CSI reporting configuration indicating a first RS resource set, a channel measurement resource of the first CSI reporting configuration comprising the first RS resource set, the first RS resource set comprising one or more RS resources, and each RS resource in the first RS resource set being a CSI-RS resource or an SS/PBCH block resource; the reference time-domain resource set being configured to a serving cell where the first RS resource set is located; and
a second receiver receiving first CSI reporting,

wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; the first condition comprises: belonging to the reference time-domain resource set in a time domain, or the first condition comprises: being orthogonal to the reference time-domain resource set in a time domain; and the first opportunity set is used for obtaining channel measurement used for calculating the first CSI reporting.

19. The second node device according to claim 18, wherein each RS resource in the first RS resource set is a CSI-RS resource, and each RS resource in the first RS resource set is periodic or semi-persistent; each RS resource in the first RS resource set is a CSI-RS resource; and the first CSI reporting comprises a CRI, an RI, a PMI and a CQI, or the first CSI reporting comprises a CRI, an RI, an LI, a PMI and a CQI, or the first CSI reporting comprises a CRI, an RI and a PMI, or the first CSI reporting comprises a CRI, an RI and a CQI.

20. The second node device according to claim 18 or 19, wherein the first CSI reporting at least comprises a first resource indicator, the first resource indicator indicates a first RS resource, and the first RS resource is one RS resource in the first RS resource set; the first RS resource set comprises a plurality of CSI-RS resources, the first RS resource is a CSI-RS resource, and the first resource indicator is a CRI (CSI-RS Resource Indicator); or the first RS resource set comprises a plurality of SS/PBCH block resources, the first RS resource is an SS/PBCH block resource, and the first resource indicator is an SSBRI (SS/PBCH Block Resource Indicator); and one or more transmission opportunities, which are not later than that of the CSI reference resource of the first CSI reporting and meet the first condition, of the first RS resource belong to the first opportunity set.

21. The second node device according to claim 20, wherein the first CSI configuration comprises a first higher layer parameter set to 'Configured'; the first higher layer parameter is timeRestrictionForChannelMeasurements, or a name of the first higher layer parameter comprises timeRestrictionForChannelMeasurements; and one latest transmission opportunity, which is not later than that of the CSI reference resource of the first CSI reporting and meets the first condition, of the first RS resource belongs to the first opportunity set, or the first opportunity set is composed of one latest transmission opportunity, which is not later than that of the CSI reference resource of the first CSI reporting and meets the first condition, of the first RS resource.

22. The second node device according to claim 20, wherein the first CSI configuration comprises a first higher layer parameter set to 'notConfigured'; the first higher layer parameter is timeRestrictionForChannelMeasurements, or a name of the first higher layer parameter comprises timeRestrictionForChannelMeasurements; and the first opportunity set comprises all transmission opportunities, which are not later than that of a CSI reference resource of the first CSI reporting and meet a first condition, of a first RS resource.

23. The second node device according to any one of claims 18 to 20, wherein the first CSI configuration comprises a first higher layer parameter set to 'Configured'; the first higher layer parameter is timeRestrictionForChannelMeasurements, or a name of the first higher layer parameter comprises timeRestrictionForChannelMeasurements; and the first opportunity set comprises at least one transmission opportunity, which is not later than that of a CSI reference resource of the first CSI reporting and meets a first condition, of each RS resource in the first RS resource set.

24. The second node device according to any one of claims 18 to 20, wherein the first CSI configuration comprises a first higher layer parameter set to 'notConfigured'; the first higher layer parameter is timeRestrictionForChannelMeasurements, or a name of the first higher layer parameter comprises timeRestrictionForChannelMeasurements; and the first opportunity set comprises all transmission opportunities, which are not later than that of a CSI reference resource of the first CSI reporting and meet a first condition, of each RS resource in the first RS resource set.

25. The second node device according to any one of claims 18 to 24, wherein the first condition comprises: being orthogonal to the reference time-domain resource set in the time domain; and when one transmission opportunity of one CSI-RS resource belongs to the reference time-domain resource set in the time domain, reception of the one transmission opportunity of the one CSI-RS resource is abandoned.

26. The second node device according to any one of claims 18 to 25, wherein the first information block is used for indicating the reference time-domain resource set, or the first information block implicitly indicates the reference time-domain resource set.

27. The second node device according to any one of claims 18 to 26, wherein the first information block indicates a period and a time offset of the reference time-domain resource set, or the first information block indicates a time-domain resource included in the reference time-domain resource set within one period, or the first information block indicates a period and a time offset of the reference time-domain resource set, and the first information block indicates a time-domain resource included in the reference time-domain resource set within one period.

28. The second node device according to any one of claims 18 to 27, wherein the CSI reference resource of the first CSI reporting is a first downlink slot in the time domain, the first downlink slot depends on a second uplink slot, and the second uplink slot is an uplink slot sending the first CSI reporting.

29. The second node device according to claim 28, wherein the second uplink slot is an uplink slot $n'$, the first downlink slot is a downlink slot $n - n_{CSI\_ref} - K_{offset} \cdot \frac{2^{\mu_{DL}}}{2^{\mu_{K_{offset}}}}$, and the n is $\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$.

30. The second node device according to any one of claims 18 to 29, wherein each symbol in the reference time-domain resource set is configured by a higher layer parameter as a DL symbol, or each symbol in the reference time-domain resource set is configured by a higher layer parameter as a DL symbol or a Flexible symbol;
or the reference time-domain resource set comprises one or more symbols, at least one symbol in the reference time-domain resource set is configured by a higher layer parameter as a DL symbol, and one or more subcarriers in the one or more DL symbols of the reference time-domain resource set are used for uplink transmission.

31. The second node device according to any one of claims 18 to 30, comprising:

a second transmitter sending a second information block,
wherein the second information block is used for determining a reference frequency-domain resource set; and UL transmission in one or more DL symbols of the reference time-domain resource set belongs to the reference frequency-domain resource set in a frequency domain.

32. The second node device according to any one of claims 18 to 31, wherein the first CSI configuration comprises a first higher layer parameter set to 'Configured', the first RS resource is one RS resource in the first RS resource set, the first opportunity set comprises one latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource.

33. A method for a first node used for wireless communication, comprising:

receiving a first information block, the first information block being used for determining a reference time-domain resource set, the first information block being carried by RRC signaling, or the first information block comprising DCI, or the first information block being carried jointly by higher layer signaling and DCI; and receiving a first CSI reporting configuration, the first CSI reporting configuration indicating a first RS resource set, a channel measurement resource of the first CSI reporting configuration comprising the first RS resource set, the first RS resource set comprising one or more RS resources, and each RS resource in the first RS resource set being a CSI-RS resource or an SS/PBCH block resource; the reference time-domain resource set being configured to a serving cell where the first RS resource set is located; and
sending first CSI reporting,
wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; the first condition comprises: belonging to the reference time-domain resource set in a time domain, or the first condition comprises: being orthogonal to the reference time-domain resource set in a time domain; and the first opportunity set is used for obtaining channel measurement used for calculating the first CSI reporting.

34. The method according to claim 33, wherein each RS resource in the first RS resource set is a CSI-RS resource, and each RS resource in the first RS resource set is periodic or semi-persistent; each RS resource in the first RS resource set is a CSI-RS resource; and the first CSI reporting comprises a CRI, an RI, a PMI and a CQI, or the first CSI reporting comprises a CRI, an RI, an LI, a PMI and a CQI, or the first CSI reporting comprises a CRI, an RI and a PMI, or the first CSI reporting comprises a CRI, an RI and a CQI.

35. The method according to claim 33 or 34, wherein the first CSI reporting at least comprises a first resource indicator, the first resource indicator indicates a first RS resource, and the first RS resource is one RS resource in the first RS resource set; the first RS resource set comprises a plurality of CSI-RS resources, the first RS resource is a CSI-RS resource, and the first resource indicator is a CRI (CSI-RS Resource Indicator); or the first RS resource set comprises a plurality of SS/PBCH block resources, the first RS resource is an SS/PBCH block resource, and the first resource indicator is an SSBRI (SS/PBCH Block Resource Indicator); and one or more transmission opportunities, which are not later than that of the CSI reference resource of the first CSI reporting and meet the first condition, of the first RS resource belong to the first opportunity set.

36. The method according to claim 35, wherein the first CSI configuration comprises a first higher layer parameter set to 'Configured'; the first higher layer parameter is timeRestrictionForChannelMeasurements, or a name of the first higher layer parameter comprises timeRestrictionForChannelMeasurements; and one latest transmission opportunity, which is not later than that of the CSI reference resource of the first CSI reporting and meets the first condition, of the first RS resource belongs to the first opportunity set, or the first opportunity set is composed of one latest transmission opportunity, which is not later than that of the CSI reference resource of the first CSI reporting and meets the first condition, of the first RS resource.

37. The method according to claim 35, wherein the first CSI configuration comprises a first higher layer parameter set to 'notConfigured'; the first higher layer parameter is timeRestrictionForChannelMeasurements, or a name of the first higher layer parameter comprises timeRestrictionForChannelMeasurements; and the first opportunity set comprises all transmission opportunities, which are not later than that of a CSI reference resource of the first CSI reporting and meet a first condition, of a first RS resource.

38. The method according to any one of claims 33 to 35, wherein the first CSI configuration comprises a first higher layer parameter set to 'Configured'; the first higher layer parameter is timeRestrictionForChannelMeasurements, or a name of the first higher layer parameter comprises timeRestrictionForChannelMeasurements; and the first opportunity set comprises at least one transmission opportunity, which is not later than that of a CSI reference resource of the first CSI reporting and meets a first condition, of each RS resource in the first RS resource set.

39. The method according to any one of claims 33 to 35, wherein the first CSI configuration comprises a first higher layer parameter set to 'notConfigured'; the first higher layer parameter is timeRestrictionForChannelMeasurements, or a name of the first higher layer parameter comprises timeRestrictionForChannelMeasurements; and the first opportunity set comprises all transmission opportunities, which are not later than that of a CSI reference resource of the first CSI reporting and meet a first condition, of each RS resource in the first RS resource set.

40. The method according to any one of claims 33 to 39, wherein the first condition comprises: being orthogonal to the reference time-domain resource set in the time domain; and when one transmission opportunity of one CSI-RS resource belongs to the reference time-domain resource set in the time domain, reception of the one transmission opportunity of the one CSI-RS resource is abandoned.

41. The method according to any one of claims 33 to 40, wherein the first information block is used for indicating the reference time-domain resource set, or the first information block implicitly indicates the reference time-domain resource set.

42. The method according to any one of claims 33 to 41, wherein the first information block indicates a period and a time offset of the reference time-domain resource set, or the first information block indicates a time-domain resource included in the reference time-domain resource set within one period, or the first information block indicates a period and a time offset of the reference time-domain resource set, and the first information block indicates a time-domain resource included in the reference time-domain resource set within one period.

43. The method according to any one of claims 33 to 42, wherein the CSI reference resource of the first CSI reporting is a first downlink slot in the time domain, the first downlink slot depends on a second uplink slot, and the second uplink slot is an uplink slot sending the first CSI reporting.

44. The method according to claim 43, wherein the second uplink slot is an uplink slot n', the first downlink slot is a downlink slot $n - n_{CSI\_ref} - K_{offset} \cdot \dfrac{2^{\mu_{DL}}}{2^{\mu_{K_{offset}}}}$, and the n is

$$\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor .$$

45. The method according to any one of claims 33 to 44, wherein the first CSI reporting configuration is IE CSI-ReportConfig, the first CSI reporting configuration comprises a first CSI resource configuration, the first CSI resource configuration is one piece of IE CSI-ResourceConfig, the first CSI reporting configuration comprises a resources-ForChannelMeasurement field, and the resourcesForChannelMeasurement field included in the first CSI reporting configuration indicates the first CSI resource configuration; the first CSI resource configuration indicates the first RS resource set, and the first CSI resource configuration indicating the first RS resource set comprises an identifier or index of the first RS resource set;

or the first CSI reporting configuration is IE CSI-ReportConfig, the first CSI reporting configuration comprises a plurality of CSI resource configurations, the first CSI resource configuration is one of the plurality of CSI resource configurations, and the first CSI resource configuration indicates the first RS resource set; and other CSI resource configurations other than the first CSI resource configuration in the plurality of CSI resource configurations indicate a CSI-IM (Channel State Information - Interference Measurement) resource or at least a CSI-IM resource in an NZP CSI-RS resource used for interference measurement.

46. The method according to any one of claims 33 to 45, wherein the first CSI reporting configuration is used for configuring one piece of periodic or semi-persistent CSI reporting, and the first CSI reporting is a reporting instance of the periodic or semi-persistent CSI reporting configured by the first CSI reporting configuration;

or the first CSI reporting is aperiodic, the first CSI reporting is triggered by one piece of DCI (Downlink Control Information), the one piece of DCI comprises a CSI request field, the CSI request field of the one piece of DCI is used for indicating one trigger state, and the one trigger state indicates the first CSI reporting configuration.

47. The method according to any one of claims 33 to 46, wherein each symbol in the reference time-domain resource set is configured by a higher layer parameter as a DL symbol, or each symbol in the reference time-domain resource set is configured by a higher layer parameter as a DL symbol or a Flexible symbol;

or the reference time-domain resource set comprises one or more symbols, at least one symbol in the reference time-domain resource set is configured by a higher layer parameter as a DL symbol, and one or more subcarriers in the one or more DL symbols of the reference time-domain resource set are used for uplink transmission.

48. The method according to any one of claims 33 to 47, comprising:

    receiving a second information block,

wherein the second information block is used for determining a reference frequency-domain resource set; and UL transmission in one or more DL symbols of the reference time-domain resource set belongs to the reference frequency-domain resource set in a frequency domain.

49. The method according to any one of claims 33 to 48, wherein the first CSI configuration comprises a first higher layer parameter set to 'Configured', the first RS resource is one RS resource in the first RS resource set, the first opportunity set comprises one latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource.

50. A method for a second node used for wireless communication, comprising:

sending a first information block, the first information block being used for determining a reference time-domain resource set, the first information block being carried by RRC signaling, or the first information block comprising DCI, or the first information block being carried jointly by higher layer signaling and DCI; and sending a first CSI reporting configuration, the first CSI reporting configuration indicating a first RS resource set, a channel measurement resource of the first CSI reporting configuration comprising the first RS resource set, the first RS resource set comprising one or more RS resources, and each RS resource in the first RS resource set being a CSI-RS resource or an SS/PBCH block resource; the reference time-domain resource set being configured to a serving cell where the first RS resource set is located; and
receiving first CSI reporting,
wherein a first opportunity set comprises at least one transmission opportunity, which is not later than that of a CSI reference resource of the first CSI reporting and meets a first condition, of at least one RS resource in the first RS resource set, and the first condition depends on the reference time-domain resource set; the first condition comprises: belonging to the reference time-domain resource set in a time domain, or the first condition comprises: being orthogonal to the reference time-domain resource set in a time domain; and the first opportunity set is used for obtaining channel measurement used for calculating the first CSI reporting.

51. The method according to claim 50, wherein each RS resource in the first RS resource set is a CSI-RS resource, and each RS resource in the first RS resource set is periodic or semi-persistent; each RS resource in the first RS resource set is a CSI-RS resource; and the first CSI reporting comprises a CRI, an RI, a PMI and a CQI, or the first CSI reporting comprises a CRI, an RI, an LI, a PMI and a CQI, or the first CSI reporting comprises a CRI, an RI and a PMI, or the first CSI reporting comprises a CRI, an RI and a CQI.

52. The method according to claim 50 or 51, wherein the first CSI reporting at least comprises a first resource indicator, the first resource indicator indicates a first RS resource, and the first RS resource is one RS resource in the first RS resource set; the first RS resource set comprises a plurality of CSI-RS resources, the first RS resource is a CSI-RS resource, and the first resource indicator is a CRI (CSI-RS Resource Indicator); or the first RS resource set comprises a plurality of SS/PBCH block resources, the first RS resource is an SS/PBCH block resource, and the first resource indicator is an SSBRI (SS/PBCH Block Resource Indicator); and one or more transmission opportunities, which are not later than that of the CSI reference resource of the first CSI reporting and meet the first condition, of the first RS resource belong to the first opportunity set.

53. The method according to claim 52, wherein the first CSI configuration comprises a first higher layer parameter set to 'Configured'; the first higher layer parameter is timeRestrictionForChannelMeasurements, or a name of the first higher layer parameter comprises timeRestrictionForChannelMeasurements; and one latest transmission opportunity, which is not later than that of the CSI reference resource of the first CSI reporting and meets the first condition, of the first RS resource belongs to the first opportunity set, or the first opportunity set is composed of one latest transmission opportunity, which is not later than that of the CSI reference resource of the first CSI reporting and meets the first condition, of the first RS resource.

54. The method according to claim 52, wherein the first CSI configuration comprises a first higher layer parameter set to 'notConfigured'; the first higher layer parameter is timeRestrictionForChannelMeasurements, or a name of the first higher layer parameter comprises timeRestrictionForChannelMeasurements; and the first opportunity set comprises all transmission opportunities, which are not later than that of a CSI reference resource of the first CSI reporting and meet a first condition, of a first RS resource.

55. The method according to any one of claims 50 to 52, wherein the first CSI configuration comprises a first higher layer parameter set to 'Configured'; the first higher layer parameter is timeRestrictionForChannelMeasurements, or a name of the first higher layer parameter comprises timeRestrictionForChannelMeasurements; and the first opportunity set comprises at least one transmission opportunity, which is not later than that of a CSI reference resource of the first CSI reporting and meets a first condition, of each RS resource in the first RS resource set.

56. The method according to any one of claims 50 to 52, wherein the first CSI configuration comprises a first higher layer parameter set to 'notConfigured'; the first higher layer parameter is timeRestrictionForChannelMeasurements, or a name of the first higher layer parameter comprises timeRestrictionForChannelMeasurements; and the first opportunity set comprises all transmission opportunities, which are not later than that of a CSI reference resource of the first CSI reporting and meet a first condition, of each RS resource in the first RS resource set.

57. The method according to any one of claims 50 to 56, wherein the first condition comprises: being orthogonal to the reference time-domain resource set in the time domain; and when one transmission opportunity of one CSI-RS resource belongs to the reference time-domain resource set in the time domain, reception of the one transmission opportunity of the one CSI-RS resource is abandoned.

58. The method according to any one of claims 50 to 57, wherein the first information block is used for indicating the reference time-domain resource set, or the first information block implicitly indicates the reference time-domain resource set.

59. The method according to any one of claims 50 to 58, wherein the first information block indicates a period and a time offset of the reference time-domain resource set, or the first information block indicates a time-domain resource included in the reference time-domain resource set within one period, or the first information block indicates a period and a time offset of the reference time-domain resource set, and the first information block indicates a time-domain resource included in the reference time-domain resource set within one period.

60. The method according to any one of claims 50 to 59, wherein the CSI reference resource of the first CSI reporting is a first downlink slot in the time domain, the first downlink slot depends on a second uplink slot, and the second uplink slot is an uplink slot sending the first CSI reporting.

61. The method according to claim 60, wherein the second uplink slot is an uplink slot n', the first downlink slot is a downlink slot $n - n_{CSI\_ref} - K_{offset} \cdot \frac{2^{\mu_{DL}}}{2^{\mu_{K_{offset}}}}$, and the n is $\left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor$.

62. The method according to any one of claims 50 to 61, wherein each symbol in the reference time-domain resource set is configured by a higher layer parameter as a DL symbol, or each symbol in the reference time-domain resource set is configured by a higher layer parameter as a DL symbol or a Flexible symbol;
or the reference time-domain resource set comprises one or more symbols, at least one symbol in the reference time-domain resource set is configured by a higher layer parameter as a DL symbol, and one or more subcarriers in the one or more DL symbols of the reference time-domain resource set are used for uplink transmission.

63. The method according to any one of claims 50 to 62, comprising:

sending a second information block,
wherein the second information block is used for determining a reference frequency-domain resource set; and UL transmission in one or more DL symbols of the reference time-domain resource set belongs to the reference frequency-domain resource set in a frequency domain.

64. The method according to any one of claims 50 to 63, wherein the first CSI configuration comprises a first higher layer parameter set to 'Configured', the first RS resource is one RS resource in the first RS resource set, the first opportunity set comprises one latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource.

*100*

First node

↓

Receive a first information block — 101

↓

Receive a first CSI reporting configuration — 102

↓

Send first CSI reporting — 103

FIG. 1

5GS/EPS 200

HSS/UDM — 220

NG-RAN 202

UE — 201

NR Node B — 203

Other NR Node B — 204

UE — 241

MME/AMF/ SMF — 211

Other MME/AMF/ SMF — 214

S-GW/UPF — 212

P-GW/UPF — 213

Internet service — 230

5GC/EPC 210

FIG. 2

| Control plane 300 | | User plane 350 | |
|---|---|---|---|
| L3 | RRC — 306 | | SDAP — 356 |
| 305 L2 | PDCP — 304 | 355 L2 | PDCP — 354 |
| | RLC — 303 | | RLC — 353 |
| | MAC — 302 | | MAC — 352 |
| L1 | PHY — 301 | L1 | PHY — 351 |

FIG. 3

FIG. 4

FIG. 5

At least comprises

First CSI reporting ——————→ First resource indicator

Indicates

First resource indicator ——————→ First RS resource

The first RS resource is one RS resource in the first RS resource set

One or more transmission opportunities, which are not later than that of the CSI reference resource of the first CSI reporting and meet the first condition, of the first RS resource

Belong to ——————→ First opportunity set

FIG. 6

Comprises

The reference time-domain resource set ——————→ One or more symbols

Is configured by a higher layer parameter as

At least one symbol in the reference time-domain resource set ——————→ A DL symbol

Are used for

One or more subcarriers in one or more DL symbols of the reference time-domain resource set ——————→ Uplink transmission

FIG. 7

First node

↓

Receive a second information block

FIG. 8

Comprises

（a） The first condition ——————→ Overlapping with the reference time-domain resource set in a time domain

Comprises

（b） The first condition ——————→ Being orthogonal to the reference time-domain resource set in a time domain

FIG. 9

Second higher layer parameter →(Is used for determining that)→ The first condition either comprises: overlapping with the reference time-domain resource set in a time domain or comprises: being orthogonal to the reference time-domain resource set in a time domain

FIG. 10

First CSI configuration →(Comprises)→ First higher layer parameter set to 'Configured'

The first RS resource is one RS resource in the first RS resource set

A first opportunity set →(Comprises)→ One latest transmission opportunity, which is not later than that of the CSI reference resource of the first CSI reporting and meets the first condition, of the first RS resource and one latest transmission opportunity, which is not later than that of the CSI reference resource of the first CSI reporting and does not meet the first condition, of the first RS resource

FIG. 11

1200

First node device

First receiver 1201

First transmitter 1202

FIG. 12

1300

Second node device

Second transmitter 1301

Second receiver 1302

FIG. 13

## INTERNATIONAL SEARCH REPORT

| | International application No. |
|---|---|
| | **PCT/CN2024/091907** |

| **A.** | **CLASSIFICATION OF SUBJECT MATTER** |
|---|---|

H04L 5/00(2006.01)i

According to International Patent Classification (IPC) or to both national classification and IPC

| **B.** | **FIELDS SEARCHED** |
|---|---|

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXTC, 3GPP, DWPI: CSI上报, 不晚于, 时域资源集合, 早于, 资源集合, CSI report, CSI-RS, later than, resource set, CSI-ReportConfig, CSI-ResourceConfig

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 117939513 A (SHANGHAI LANGBO COMMUNICATION TECHNOLOGY LTD.) 26 April 2024 (2024-04-26) description, paragraphs 75-151 | 1-64 |
| A | CN 115459889 A (SHANGHAI LANGBO COMMUNICATION TECHNOLOGY LTD.) 09 December 2022 (2022-12-09) description, paragraphs 91-154, 188, 240 and 499, and figure 10 | 1-64 |
| A | WO 2023061353 A1 (SHANGHAI LANGBO COMMUNICATION TECHNOLOGY LTD.) 20 April 2023 (2023-04-20) entire document | 1-64 |
| A | CN 111526591 A (BEIJING SAMSUNG TELECOM R&D CENTER et al.) 11 August 2020 (2020-08-11) entire document | 1-64 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 July 2024** | **10 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/091907**

| Patent document cited in search report | | | Publication date (day/month/year) | Patent family member(s) | | | Publication date (day/month/year) |
|---|---|---|---|---|---|---|---|
| CN | 117939513 | A | 26 April 2024 | None | | | |
| CN | 115459889 | A | 09 December 2022 | None | | | |
| WO | 2023061353 | A1 | 20 April 2023 | None | | | |
| CN | 111526591 | A | 11 August 2020 | KR | 20210111359 | A | 10 September 2021 |
| | | | | WO | 2020159303 | A1 | 06 August 2020 |
| | | | | US | 2022124711 | A1 | 21 April 2022 |

Form PCT/ISA/210 (patent family annex) (July 2022)